(19) Europäisches Patentamt
European Patent Office
Office européen des brevets

(11) **EP 3 333 036 B1**

(12) **EUROPÄISCHE PATENTSCHRIFT**

(45) Veröffentlichungstag und Bekanntmachung des Hinweises auf die Patenterteilung:
**24.02.2021  Patentblatt 2021/08**

(51) Int Cl.:
***B60W 50/00*** *(2006.01)*  ***B60W 20/00*** *(2016.01)*

(21) Anmeldenummer: **17207885.9**

(22) Anmeldetag: **04.11.2014**

(54) **VERFAHREN ZUM ERMITTELN EINES FAHRZUSTANDES EINES HYBRIDFAHRZEUGES FÜR STRECKENSEGMENTE EINER VORAUSLIEGENDEN FAHRSTRECKE UND HYBRIDFAHRZEUG**

METHOD FOR DETERMINING A DRIVING STATE OF A HYBRID VEHICLE FOR SEGMENTS OF A ROUTE AHEAD AND HYBRID VEHICLE

PROCÉDÉ DE DÉTERMINATION D'UN ÉTAT DE CONDUITE D'UN VÉHICULE HYBRIDE POUR DES SEGMENTS DU TRAJET D'UN TRAJET EN AVAL ET VÉHICULE HYBRIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.12.2013   DE 102013225558**

(43) Veröffentlichungstag der Anmeldung:
**13.06.2018   Patentblatt 2018/24**

(62) Dokumentnummer(n) der früheren Anmeldung(en) nach Art. 76 EPÜ:
**14795603.1 / 3 079 962**

(73) Patentinhaber: **VOLKSWAGEN AKTIENGESELLSCHAFT**
**38440 Wolfsburg (DE)**

(72) Erfinder:
- **Bellin, Jan**
  **30627 Hannover (DE)**
- **Weiß, Norbert**
  **38173 Sickte (DE)**
- **Auer, Dr. Richard**
  **38442 Wolfsburg (DE)**
- **Tessars, Christopher**
  **38106 Braunschweig (DE)**

(56) Entgegenhaltungen:
**EP-A1- 2 071 285       WO-A1-2012/114446**
**WO-A2-2012/010950    US-A1- 2010 131 139**
**US-B1- 6 314 347**

**Beschreibung**

Die Erfindung betrifft ein Verfahren zum Ermitteln eines Fahrzustandes eines Hybridfahrzeuges für Streckensegmente einer vorausliegenden Fahrstrecke und ein Hybridfahrzeug.

Ein Hybridfahrzeug umfasst typischerweise neben einem Verbrennungsmotor einen Elektromotor als zweiten Antrieb, um Kraftstoffverbrauch und Schadstoffemissionen zu reduzieren. Das Hybridfahrzeug kann dabei sowohl vom Verbrennungs- als auch vom Elektromotor alleine oder von beiden gleichzeitig angetrieben werden.

Ein elektrischer Energiespeicher, wie zum Beispiel eine Batterie, versorgt den Elektromotor mit elektrischer Energie. Es ist bekannt, den Energiespeicher mit elektrischer Energie aufzuladen, die von einem Energiewandler stammt, wie z.B. einem Generator, der von der Verbrennungskraftmaschine betrieben wird, oder die durch Rückgewinnung kinetischer Energie beim Bremsvorgang des Fahrzeugs gewonnen wird. Außerdem kann der Energiespeicher durch Anschluss an eine externe elektrische Stromquelle geladen werden. Hybridfahrzeuge, die an eine externe elektrische Stromquelle anschließbar sind, nennt man auch "Plug-In-Hybridfahrzeug". Meist umfassen diese Plug-In-Hybridfahrzeuge eine größere Batterie als reine Hybridfahrzeuge und stellen so eine Mischform zwischen Hybridfahrzeug und Elektrofahrzeug dar.

Das Ziel beim Betreiben eines Hybridfahrzeuges ist es, den Verbrennungsmotor und den Elektromotor möglichst effizient einzusetzen, um den Primärenergiebedarf des Verbrennungsmotors zu optimieren und die Abgasemissionen zu reduzieren. Dabei kann die gesamte Energiebilanz des Verbrennungs- und des Elektromotors verbessert werden.

Grundsätzlich ist es bekannt, zur Optimierung des Betriebs eines Hybridfahrzeugs eine zu absolvierende Fahrstrecke mit einzubeziehen.

Zum Beispiel ist aus der EP 1 270 303 A2 ein Verfahren zum Steuern eines Antriebsstrangs eines Hybridfahrzeugs bekannt, bei dem abhängig von Daten, die eine zu absolvierende Fahrstrecke charakterisieren, eine Betriebsstrategie für die Komponenten des Antriebsstrangs festgelegt werden. Der zu erwartende Energieverbrauch und eine Zeitspanne, für die Energie benötigt wird, werden abhängig von der Betriebsstrategie und den Streckendaten berechnet. Reicht die Zeitspanne nicht aus, wird eine alternative Betriebsstrategie festgelegt und die sich daraus ergebende Zeitspanne neu geprüft.

Bei dem genannten Verfahren, bei dem nur für eine unmittelbar vorausliegende Teilstrecke einer Fahrstrecke eine Analyse bezüglich des gesamten Bedarfs an elektrischer Energie durchgeführt und nur eine kurzfristige Antriebsauswahl für die aktuellen Streckenabschnitte getroffen wird, hat den Nachteil, dass nur eine augenblicklich optimale Entscheidung auf Basis des aktuellen Ladezustands des Energiespeichers getroffen wird, aber keine für die gesamte zu befahrene Fahrstrecke optimierte Antriebsstrategie erarbeitet wird. Da sich der aktuelle Ladezustandswert des Energiespeichers nur aus der Vergangenheit ergibt und somit nur eine begrenzte Aussage für die noch zu befahrende Fahrstrecke liefern kann, kann die vollständige Energiebilanz für die gesamte Fahrstrecke nur beschränkt verbessert werden.

Aus der DE 100 05 581 A1 ist ein Verfahren zum Steuern eines Hybridfahrzeugs bekannt, bei dem die durch das regenerative System zu speichernde Energiemenge geplant werden kann und dadurch die Energieeffizienz sichergestellt wird. Insbesondere dann, wenn die zu befahrende Route nicht vorab angegeben werden kann, erfolgt die Planung durch eine Prognose der Verteilung der Höhenpositionen im Gelände anhand von Kartendaten und einem Positionsermittler. Die Berechnung wird ausgeführt, indem die erforderliche Zeit zum Überwinden einer Distanz zwischen den angrenzenden Verbindungspunkten ermittelt wird, die in einer Kartendatenbasis gespeichert sind. Auf dieser Basis und einer Fahrzeitprognose wird eine Wahrscheinlichkeitsverteilung ermittelt, um den Fahrzeug-Energiestatus des Hybridfahrzeugs zu steuern, wobei die Energiezurückgewinnungs- und Entlademengen des regenerativen Systems und die Motorleistung konsistent zu einem ermittelten Grenzbereich geplant werden. Hier ist nur eine beschränkte Verbesserung der Energiebilanz möglich, da lediglich Höhenunterschiede in einer Fahrstrecke berücksichtigt werden.

Aus der Übersetzung DE 697 09 002 T2 ist außerdem ein Verfahren und eine Antriebsanordnung bekannt, bei der ein Ladzustand einer Akkumulatorvorrichtung anhand eines prognostizierten Fahrzustands eingestellt wird. Eine Fahrzustands-Prognosevorrichtung kann den Fahrzustand unter anderem auch auf Grundlage eines Straßenzustands eines Bezirks prognostizieren, durch den eine zu absolvierende Fahrstrecke laufen soll. Eine Optimierung hinsichtlich der Energiebilanz des Hybridfahrzeugs ist allerdings nicht angesprochen.

Aus dem Dokument US 6,314,347 B1 ist ein Verfahren und eine Vorrichtung für ein Hybridfahrzeug bekannt, in welchem eine Fahrstrecke in eine Anzahl von Streckensegmenten unterteilt wird, wobei ein Geschwindigkeitsverlauf sowie rekuperierte Energie prädiziert werden.

Aus dem Dokument EP 2 071 285 A1 ist weiterhin eine Anzeigevorrichtung und eine Rechnereinheit bekannt, wobei eine vorausliegende Route in Segmente unterteilt wird, diesen Segmenten Fahrmodi zugewiesen und diese schließlich auf der Anzeigeeinheit angezeigt werden.

Aufgabe der vorliegenden Erfindung ist es, ein Verfahren zum Ermitteln eines Fahrzustandes eines Hybridfahrzeuges für Streckensegmente einer vorausliegenden Fahrstrecke und ein Hybridfahrzeug bereitzustellen, das die oben genannten Nachteile wenigstens teilweise überwindet.

Diese Aufgabe wird durch ein erfindungsgemäßes Verfahren zum Ermitteln eines Fahrzustandes eines Hybridfahrzeuges für Streckensegmente einer vorausliegenden Fahrstrecke nach Anspruch 1 und ein Hybridfahrzeug nach Anspruch 10 gelöst.

Ein erfindungsgemäßes Verfahren zum Ermitteln eines Fahrzustandes eines Hybridfahrzeuges für Streckensegmente einer vorausliegenden Fahrstrecke, wobei das Hybridfahrzeug eine Verbrennungskraftmaschine, eine Elektromaschine und einen elektrischen Energiespeicher zur Versorgung der Elektromaschine mit elektrischer Energie umfasst, umfasst die Schritte:

Erhalten von Fahrstreckendaten, die die vorausliegende Fahrstrecke repräsentieren, wobei die vorausliegende Fahrstrecke in mehrere Streckensegmente unterteilt ist und die Fahrstreckendaten Streckeninformationen über die Streckensegmente enthalten; und

Ermitteln eines Eignungsparameters für einen vorgegebenen Fahrzustand des Hybridfahrzeugs für jedes Streckensegment auf Grundlage der Streckeninformationen für das jeweilige Streckensegment, wobei der vorgegebene Fahrzustand wenigstens einen rein elektrischen Fahrzustand umfasst, bei dem die Elektromaschine das Hybridfahrzeug antreibt, und einen zweiten Fahrzustand, bei dem die Verbrennungskraftmaschine das Hybridfahrzeug antreibt.

Ein erfindungsgemäßes Hybridfahrzeug umfasst eine Verbrennungskraftmaschine, eine Elektromaschine, einen elektrischen Energiespeicher zur Versorgung der Elektromaschine mit elektrischer Energie und eine Steuerung, wobei die Steuerung dazu eingerichtet ist, das oben genannte Verfahren auszuführen.

Weitere vorteilhafte Ausgestaltungen der Erfindung ergeben sich aus den Unteransprüchen und der folgenden Beschreibung bevorzugter Ausführungsbeispiele der vorliegenden Erfindung.

Es wurde erkannt, dass bei Hybridfahrzeugen, z.B. bei Plug-In-Hybridfahrzeugen, zukünftig vermehrt auf Betriebsstrategiefunktionen über ein Motorsteuergerät des Hybridfahrzeugs zugegriffen werden kann. In die Steuerung des Antriebsstrangs wird typischerweise aber auch häufig aufgrund von kurzfristigen und unvorhersehbaren Ereignissen von motornahen Funktionen sowie von Fahrerhandlungen eingegriffen. Motornahe Funktionen betreffen z.B. die Drehzahlsteuerung, die Einspritzung, um z.B. den Abgasausstoß zu optimieren, Diagnosefunktionen oder dergleichen. Solche Eingriffe können schwer oder nicht vorhersehbar sein, so dass der vorausschauende Betrieb von Hybridfahrzeugen erschwert werden kann. Um zuverlässige Prognosen zu erstellen, könnten hohe Anforderungen an die Rechenleistung zur Optimierung der Betriebsstrategie und den Speicherplatz gestellt werden, was allerdings bei manchen Ausführungsbeispielen vermieden werden soll. Außerdem wurde erkannt, dass auf kurzfristige Änderungen von Umweltbedingungen und/oder unvorhersehbare Eingriffe in die Betriebsstrategie nicht immer schnell reagiert werden kann, ohne ein für den Fahrzeugführer nicht plausibel erscheinendes Fahrverhalten des Hybridfahrzeugs zu erzeugen.

Das erfindungsgemäße Verfahren und Hybridfahrzeug sind geeignet, diese Nachteile wenigstens teilweise zu überwinden.

Das Hybridfahrzeug umfasst eine Verbrennungskraftmaschine, eine Elektromaschine und einen elektrischen Energiespeicher zur Versorgung der Elektromaschine mit elektrischer Energie. Solche Hybridfahrzeuge sind grundsätzlich bekannt. Der Energiespeicher zur Bereitstellung elektrisch Energie für die Elektromaschine kann dabei eine Batterie, wie eine Lithium-Ionen-Batterie, einen Ultra-Cap oder einen anderen bekannten Energiespeicher umfassen. Das Hybridfahrzeug kann als Plug-In-Hybridfahrzeug ausgestaltet sein.

Zunächst werden Fahrstreckendaten erhalten, die die vorausliegende Fahrstrecke repräsentieren, wobei die Fahrstrecke in mehrere Streckensegmente unterteilt ist und die Fahrstreckendaten Streckeninformationen über die Streckensegmente enthalten.

Die vorausliegende Fahrstrecke kann dabei eine Fahrstrecke sein, die mit dem Hybridfahrzeug zu absolvieren ist. Der Startpunkt der Fahrstrecke entspricht zum Beispiel dem aktuellen Standort des Hybridfahrzeugs und der Endpunkt der Fahrstrecke entspricht zum Beispiel einem Ziel, an dem das Hybridfahrzeug nach Absolvieren der Fahrstrecke ankommen soll. Die Fahrstrecke kann in einem Navigationsgerät durch entsprechende Benutzereingabe festgelegt sein.

Die Fahrstreckendaten repräsentieren die vorausliegende Fahrstrecke und enthalten Streckeninformationen über die vorausliegende Fahrstrecke bzw. die Streckensegmente der Fahrstrecke. Wie erwähnt, ist die vorausliegende Fahrstrecke in Streckensegmente unterteilt. Die Einteilung in Streckensegmente kann z.B. ein Navigationsgerät vornehmen. Das Navigationsgerät unterteilt dabei die vorausliegende Fahrstrecke z.B. in Streckensegmente, die von einer Straßenkreuzung zur nächsten reichen oder von einer Autobahnausfahrt oder Landstraßenabfahrt zur nächsten, usw. Dadurch unterscheiden sich die Streckensegmente typischerweise durch den erwarteten Energieverbrauch, den das Hybridfahrzeug zum Durchfahren des Streckensegments benötigt. Der Energieverbrauch ist dabei der Verbrauch für Kraftstoff, wenn die Verbrennungskraftmaschine das Hybridfahrzeug antreibt, und der elektrische Stromverbrauch aus dem elektrischen Energiespeicher, wenn die Elektromaschine das Hybridfahrzeug antreibt.

Die Streckeninformation über die jeweiligen Streckensegmente umfasst dabei z.B. Informationen über den Streckentyp (Landstraße, Stadt, Ort, Landstraße, Bundesstraße, etc.), über die Verkehrssituation (Stau, dichter Verkehr, freie Fahrt, Sperrung, etc.), über vorliegende positive bzw. negative Steigungen, über Sonderregelungen, z.B. Umweltzone oder Null-Emissionszone, bei der keine Abgase emittiert werden dürfen, über eine Geschwindigkeit, die auf dem Streckensegment gefahren werden darf, usw.

Das Verfahren ermittelt einen Eignungsparameter für einen vorgegebenen Fahrzustand des Hybridfahrzeugs für jedes Streckensegment auf Grundlage der Streckeninformationen für das jeweilige Streckensegment. Der vorgegebene Fahrzustand umfasst wenigstens einen rein elektrischen Fahrzustand, bei dem die Elektromaschine das Hybridfahrzeug antreibt, und einen zweiten Fahrzustand, bei dem die Verbrennungskraftmaschine das Hybridfahrzeug antreibt.

Der Eignungsparameter gibt an, wie gut ein Streckensegment dazu geeignet ist, in dem rein elektrischen Fahrzustand durchfahren zu werden und/oder in dem zweiten Fahrzustand, bei dem die Verbrennungskraftmaschine das Hybridfahrzeug antreibt.

Dazu wertet das Verfahren bei der Ermittlung des Eignungsparameters die empfangenen Streckeninformationen aus und weist jedem Streckenparameter einen Eignungsparameter zu. Der Eignungsparameter kann dabei eine natürlich Zahl sein, die aus einem Satz natürlicher Zahlen, gewählt wurde, wobei z.B. eine niedrige Zahl eine hohe Eignung für einen rein elektrischen Fahrzustand angibt, und die Eignung für einen rein elektrischen Fahrzustand mit Erhöhung der Zahl abnimmt und umgekehrt. Dabei nimmt z.B. die Eignung für den zweiten Fahrzustand, bei dem die Verbrennungskraftmaschine das Hybridfahrzeug antreibt, zu, je höher die natürliche Zahl ist, die als Eignungsparameter ermittelt wurde. Bei manchen Ausführungsbeispielen erfolgt die Zuweisung auch genau umgekehrt, das heißt je höher die Zahl ist, desto höher ist die Eignung, in einem rein elektrischen Fahrzustand gefahren zu werden und je niedriger sie ist, desto niedriger ist die Eignung, in einem rein elektrischen Fahrzustand gefahren zu werden. Neben natürlichen Zahlen können auch andere Zahlen, z.B. ganzzahlige positive und negative Zahlen, rationale Zahlen oder sogar Zeichen, wie Buchstaben oder dergleichen als Eignungsparameter verwendet werden.

Bei der Ermittlung des Eignungsparameters analysiert das Verfahren die Streckeninformationen für das jeweilige Streckensegment. Zum Beispiel kann das Verfahren ermitteln, dass es sich bei einem bestimmten Streckensegment um eine abgasfreie (Null-Emissions)-Zone handelt, sodass folglich dieses Streckensegment in einem rein elektrischen Fahrzustand durchfahren werden soll. Ein solches Streckensegment hat folglich die höchste Eignung, im rein elektrischen Fahrzustand durchfahren zu werden und es wird ein entsprechender Eignungsparameter dafür ermittelt (z.B. "1" nach dem obigen, nicht einschränkend zu verstehenden, Beispiel). Ähnliches gilt zum Beispiel, wenn für ein Streckensegment die Analyse der Streckeninformationen ergibt, dass dort Stau ist. Auch in diesem Fall ist eine hohe Eignung für rein elektrisches Fahren gegeben. Im Gegensatz dazu ist zum Beispiel ein Streckensegment, das aus der Streckeninformation als Streckentyp "Autobahn" erkannt wird, typischerweise weniger gut für rein elektrisches Fahren geeignet, als ein Streckensegment, das als Streckentyp "Stadt" erkannt wurde. Dies liegt an den typischerweise unterschiedlichen Durchschnittsgeschwindigkeiten, die auf der Autobahn höher sind als in der Stadt. Bei manchen Ausführungsbeispielen umfasst die Ermittlung des Eignungsparameters folglich auch die Ermittlung, welche Durchschnittsgeschwindigkeit in einem Streckensegment der vorausliegenden Fahrstrecke womöglich gefahren werden kann. Grundsätzlich ist die Eignung für rein elektrisches Fahren bei niedrigen Durchschnittsgeschwindigkeiten höher als bei hohen Durchschnittsgeschwindigkeiten. Entsprechend können jeweils für vorgegebene Durchschnittsgeschwindigkeitsintervalle vorgegebene Eignungsparameter definiert sein. Z.B. kann ein erstes Durchschnittsgeschwindigkeitsintervall von 0 km/h bis 30 km/h festgelegt sein (Stadt, verkehrsberuhigte Zone, "30 km/h-Zone", Stau), ein zweites von 31 km/h bis 60 km/h (Stadt, normale Zone), ein drittes von 61 km/h bis 100 km/h (Landstraße) und ein viertes von 101 km/ bis beliebige Geschwindigkeit. Demnach würde z.B. für ein Streckensegment im ersten Durchschnittsgeschwindigkeitsintervall der Eignungsparameter ermittelt werden, bei dem der rein elektrische Fahrzustand I am besten geeignet ist (z.B. 1), für ein zweites Streckensegment im zweiten Durchschnittsgeschwindigkeitsintervall der nächst beste Eignungsparameter für den rein elektrischen Fahrzustand I (z.B. 2), für ein drittes Streckensegment im dritten Durchschnittsgeschwindigkeitsintervall, wiederum der nächste beste Eignungsparameter (z.B. 3), und für ein viertes Streckensegment im vierten Durchschnittsgeschwindigkeitsintervall der Eignungsparameter, der die schlechteste Eignung für den rein elektrischen Fahrzustand I widerspiegelt (z.B. 4).

An dieser Stelle des Verfahrens ist folglich jedem Streckensegment der vorausliegenden Fahrstrecke ein Eignungsparameter zugeordnet. Diese Zuordnung kann zum Beispiel als Parametersatz für eine nachfolgende Planung einer Betriebsstrategie ausgegeben und weiterverwertet werden. Dieser Parametersatz enthält zum Beispiel für jedes Streckensegment einen ermittelten und zugeordneten Eignungsparameter.

In einer bevorzugten Ausgestaltung umfasst das Ermitteln des Eignungsparameters das Ermitteln eines Kraftstoffverbrauches unter Annahme eines den Ladezustand des Energiespeichers erhaltenden Fahrzustandes und Ermitteln eines Stromverbrauches unter Annahme eines reinen elektrischen Fahrzustandes für die Streckensegmente. Der Fahrzustand, bei dem der Ladezustand des Energiespeichers erhalten wird, kann das Betreiben der Verbrennungskraftmaschine beinhalten, die das Hybridfahrzeug antreibt und/oder den Energiespeicher entsprechend so lädt, dass zumindest im Durchschnitt der Energiespeicher seinen Ladezustand hält bzw. die gespeicherte elektrische Energie nicht verringert wird.

Der Kraftstoffverbrauch und der Stromverbrauch können als Durchschnittswerte vorgegeben sein und das Verfahren ermittelt den Kraftstoffverbrauch und/oder den Stromverbrauch, indem es bspw. in einer Datentabelle entsprechende Verbrauchswerte für den Kraftstoffverbrauch und den Stromverbrauch für ein jeweiliges Streckensegment ausliest. Das Auslesen kann auf Grundlage der Streckeninformation des jeweiligen Streckensegments geschehen. Z.B. kann, wie oben ausgeführt, aus der Streckeninformation eine mögliche Durchschnittsgeschwindigkeit oder Höchstgeschwindigkeit, die in einem Streckensegment gefahren werden kann, ermittelt werden. In der Datentabelle können, wie oben ausgeführt, Durchschnittsgeschwindigkeitsintervalle gespeichert sein, zum Beispiel die oben genannten vier Durchschnittsgeschwindigkeitsintervalle. Je nach ermittelter Durchschnittsgeschwindigkeit kann das Verfahren für jedes Streckensegment ein entsprechendes Durchschnittsgeschwindigkeitsintervall in der Datentabelle auffinden und einen für das jeweilige Durchschnittsgeschwindigkeitsintervall gespeicherten Kraftstoff- und/oder Stromverbrauch auslesen.

In einer anderen bevorzugten Ausgestaltung ermittelt das Verfahren den Kraftstoffverbrauch und/oder den Stromverbrauch anhand einer vorgegebenen Funktion, die bspw. aus einer für ein Streckensegment ermittelten Durchschnittsgeschwindigkeit einen durchschnittlichen Verbrauch für das jeweilige Streckensegment für den Kraftstoffverbrauch und/oder den Stromverbrauch ermittelt.

Der ermittelte (durchschnittliche) Kraftstoffverbrauch und/oder Stromverbrauch kann dabei auf eine Normstrecke bezogen sein, z.B. auf eine Strecke von einem Kilometer oder hundert Kilometer oder dergleichen.

Ferner werden in einer bevorzugten Ausgestaltung die ermittelten Kraftstoffverbrauchs- und/oder Stromverbrauchsdaten neben dem Eignungsparameter für jedes Streckensegment in einem Parametersatz für eine weitere Planung einer Betriebsstrategie gespeichert und/oder weiterverwertet.

In einer bevorzugten Ausgestaltung umfasst das Ermitteln des Eignungsparameters das Bestimmen eines Quotienten zwischen dem Kraftstoffverbrauch unter Annahme eines den Ladezustand des Energiespeichers erhaltenden Fahrzustandes und dem Stromverbrauch unter Annahme eines rein elektrischen Fahrzustandes. Die Quotienten für unterschiedlichen Kraftstoffverbrauch und unterschiedlichen Stromverbrauch können einfach miteinander verglichen werden.

Wird der Quotient zum Beispiel mit dem Kraftstoffverbrauch im Zähler und dem Stromverbrauch im Nenner gebildet, gibt die Größe des Ergebnisses des Quotienten die Eignung für den rein elektrischen Fahrzustand wieder. Je größer der Quotient ist, desto weniger elektrische Energie wird zum Beispiel auf einer Normstrecke (1 km, 100 km oder dergleichen) im Verhältnis zum benötigten Kraftstoffverbrauch verwendet. Der umgekehrte Fall tritt ein, wenn zum Beispiel der Stromverbrauch im Zähler und der Kraftstoffverbrauch im Nenner stehen.

In bevorzugter Ausgestaltung wird der Stromverbrauch noch mit einem Gewichtungsfaktor gewichtet. Der Gewichtungsfaktor sorgt dafür, dass der Anteil an gefahrener Strecke, der rein elektrisch gefahren wird, erhöht wird. Dies geschieht zum Beispiel dadurch, dass der Stromverbrauch durch den Gewichtungsfaktor "künstlich" erhöht oder erniedrigt wird.

Bei manchen Ausführungsbeispielen wird der Quotient nach folgender Formel ermittelt:

$$Q_{EV} = \frac{b}{e^{q_{EV}}} \qquad (1)$$

wobei $Q_{EV}$ die Eignung für den rein elektrischen Fahrzustand angibt, b den Kraftstoffverbrauch pro Normstrecke (z.B. 100 km), e den Stromverbrauch pro Normstrecke und der Parameter $q_{EV}$ im Exponenten zum Erhöhen/Verringern des Anteils (Gewichtung) der elektrisch gefahrenen Strecke dient. Ist $q_{EV}$ größer als 1, so erhöht der Gewichtungsfaktor $q_{EV}$ den Stromverbrauch künstlich für das aktuelle Streckensegment (oder einen aktuellen Streckentyp). Ist der Gewichtungsfaktor $q_{EV}$ gleich 1, so ist er neutral. Ist der Gewichtungsfaktor $q_{EV}$ kleiner als 1, so verringert er künstlich den Stromverbrauch. Wenn bspw. $q_{EV}$ größer als eins ist, werden folglich andere Streckensegmente mit geringerem Stromverbrauch für den rein elektrischen Fahrzustand bevorzugt verwendet und umgekehrt, wenn $q_{EV}$ kleiner als eins ist, wird bzw. werden die betreffenden Streckensegmente für den Fahrzustand rein elektrischen Fahrens bevorzugt verwendet. Für eine Vergrößerung der rein elektrisch zurückgelegten Strecke werden in bevorzugter Ausgestaltung diejenigen Streckensegmente bevorzugt verwendet, die einen geringen elektrischen Streckenverbrauch aufweisen. Zur Veranschaulichung dient ein Beispiel bei dem man von zwei Strecken oder Streckensegmenten "A" und "B" ausgeht, in denen der elektrische Energieverbrauch ungleich ist, z.B. in dem Sinne, dass der elektrische Energieverbrauch $e_A$ für das Streckensegment A ein wenig größer ist, als der elektrische Energieverbrauch $e_B$ für das Streckensegment B, das heißt $e_A > e_B$. Wenn nun für beide ein Wert von $q_{EV}$ größer als 1 für den Exponenten angenommen wird, steigen die elektrischen Energieverbräuche $e_A$ und $e_B$ exponentiell mit $q_{EV}$ an, da aber $e_A$ größer ist als $e_B$ steigt $e_A$ stärker an, als $e_B$, sodass $e_A^q$ wesentlich größer ist als $e_B^q$. Der angenommene elektrische Energieverbrauch steigt für $e_A$ also exponentiell stärker als für $e_B$. Waren vorher die Quotienten $b_A/e_A$ und $b_B/e_B$ ungefähr gleich groß, so wird nach dem Einführen des Exponenten $q_{EV}$ größer als eins der Quotient $Q_{EV}=b_B/e_B^q$ für das Streckensegment B deutlich größer sein als der Quotient $Q_{EV}=b_A/e_A^q$ für das Streckensegment B, sodass das Streckensegment B deutlich für den rein elektrischen Fahrzustand bevorzugt verwendet wird.

In bevorzugter Ausgestaltung weist der vorgegebene Fahrzustand weiter einen Fahrzustand auf, bei dem der Energiespeicher geladen wird. Der Energiespeicher kann z.B. beim sogenannten Rekuperieren, das heißt im Schubzustand, wenn sich das Hybridfahrzeug ohne Energie aufzuwenden bewegt, geladen werden oder durch die Verbrennungskraftmaschine, die einen entsprechenden Generator antreibt mit dessen Hilfe, der Energiespeicher geladen wird. Durch die Einbeziehung des Fahrzustandes, bei dem der Energiespeicher geladen wird, lassen sich die Streckensegmente dahingehend bewerten, ob elektrische Energie zurückgewonnen werden kann, sodass insgesamt die Energiebilanz für die vorausliegende Fahrstrecke weiter optimierbar ist.

In bevorzugter Ausgestaltung gibt der Eignungsparameter folglich auch die Eignung eines Streckensegments für den Fahrzustand an, bei dem der Energiespeicher geladen wird. Dazu wird der Eignungsparameter so ausgestaltet, dass er für jedes Streckensegment zwei Werte angibt, einen ersten Wert, der die Eignung für den Fahrzustand des rein elektrischen Fahrens angibt und einen zweiten Wert, der die Eignung für den Fahrzustand angibt, bei dem der Energiespeicher geladen wird.

Das Ermitteln des Eignungsparameters für die Eignung eines Streckensegments in dem Fahrzustand zu durchfahren, bei dem der Energiespeicher geladen wird, wird im Prinzip genauso durchgeführt, wie es weiter oben bereits für den rein elektrischen Fahrzustand erläutert wurde. Bevorzugt kann auch das Streckensegment (bzw. die Streckensegmente), das am schlechtesten für den rein elektrischen Fahrzustand geeignet ist (bzw. die am schlechtesten für den rein elektrischen Fahrzustand geeignet sind), automatisch als für den Fahrzustand zum Laden des Energiespeichers geeignet ermittelt werden. In einer anderen Ausgestaltung wird folglich die Reihenfolge der Eignungsparameter 1 bis 4, die oben beispielhaft für den rein elektrischen Fahrzustand erklärt wurde, für den Fahrzustand zum Laden des Energiespeichers umgedreht, sodass die Streckensegmente, die als am schlechtesten für den Fahrzustand rein elektrischen Fahrens geeignet ermittelt werden, als am besten für den Fahrzustand zum Laden des Energiespeichers ermittelt werden, die Streckensegmente, die als am zweitschlechtesten für den Fahrzustand rein elektrischen Fahrens geeignet ermittelt werden, als am zweitbesten für den Fahrzustand zum Laden des Energiespeichers, usw.

Das Verfahren analysiert dazu zum Beispiel die Streckeninformation für das jeweilige Streckensegment, wie es oben schon ausgeführt wurde. Dabei ermittelt das Verfahren zum Beispiel, dass es sich bei einem bestimmten Streckensegment um einen Streckentyp "Autobahn" handelt, der typischerweise am schlechtesten für rein elektrisches Fahren geeignet ist und am besten als Fahrzustand zum Laden des Energiespeichers geeignet ist. Dies liegt, wie oben bereits ausgeführt, an der typischerweise hohen Durchschnittsgeschwindigkeit auf der Autobahn. Bei manchen Ausführungsbeispielen umfasst die Ermittlung des Eignungsparameters, wie oben ausgeführt, die Ermittlung, welche Durchschnittsgeschwindigkeit in einem Streckensegment der vorausliegenden Fahrstrecke womöglich gefahren werden kann. Grundsätzlich ist die Eignung zum Laden des Energiespeichers bei höheren Durchschnittsgeschwindigkeiten höher als bei niedrigen Durchschnittsgeschwindigkeiten. Entsprechend können, wie oben ausgeführt, bei manchen Ausführungsbeispielen jeweils für vorgegebene Durchschnittsgeschwindigkeitsintervalle vorgegebene Eignungsparameter definiert sein. Z.B. kann ein erstes Durchschnittsgeschwindigkeitsintervall von 0 km/h bis 30 km/h festgelegt sein (Stadt, verkehrsberuhigte Zone, "30 km/h-Zone", Stau), ein zweites von 31 km/h bis 60 km/h (Stadt, normale Zone), ein drittes von 61 km/h bis 100 km/h (Landstraße) und ein viertes von 101 km/ bis beliebige Geschwindigkeit, wie es ebenfalls bereits oben ausgeführt wurde. Demnach würde z.B. für ein Streckensegment im ersten Durchschnittsgeschwindigkeitsintervall der Eignungsparameter ermittelt werden, bei dem der Fahrzustand zum Laden am schlechtesten geeignet ist (z.B. "4"), für ein zweites Streckensegment im zweiten Durchschnittsgeschwindigkeitsintervall der nächst schlechte Eignungsparameter für den Fahrzustand zum Laden des Energiespeichers (z.B. "3"), für ein drittes Streckensegment im dritten Durchschnittsgeschwindigkeitsintervall, wiederum der nächst schlechte Eignungsparameter (z.B. "2"), und für ein viertes Streckensegment im vierten Durchschnittsgeschwindigkeitsintervall der Eignungsparameter, der die beste Eignung für den Fahrzustand zum Laden des Energiespeichers widerspiegelt (z.B. "1").

Wie oben ausgeführt, kann der Eignungsparameter aber auch einfach umgedeutet werden, sodass z.B. der Eignungsparameter, der die schlechteste Eignung für das rein elektrische Fahren widerspiegelt (z.B. "4", wenn man das obige Beispiel heranzieht) gleichzeitig die beste Eignung für den Fahrzustand zum Laden des Energiespeichers widerspiegeln.

In bevorzugter Ausgestaltung umfasst das Ermitteln des Eignungsparameters weiter das Ermitteln eines zusätzlichen Kraftstoffverbrauches zum Laden des Energiespeichers und das Ermitteln einer elektrischen Energiemenge, die beim Laden des Energiespeichers unter Annahme des den Energiespeicher ladenden Fahrzustandes zugeführt wird. Der zusätzliche Kraftstoffverbrauch und/oder die zugeführte elektrischen Energiemenge können auf eine Normstrecke bezogen sein, z.B. 1 km oder 100 km oder dergleichen, und dadurch den durchschnittlichen Kraftstoffverbrauch zum Laden bzw. die durchschnittlich zugeführte elektrische Energiemenge pro Normstrecke repräsentieren.

In bevorzugter Ausgestaltung umfasst das Ermitteln des Eignungsparameters das Bestimmen eines Quotienten zwischen dem zusätzlichen Kraftstoffverbrauch zum Laden des Energiespeichers und der elektrischen Energiemenge, die beim Laden des Energiespeichers unter Annahme des den Energiespeicher ladenden Fahrzustandes zugeführt wird. Dabei kann die zugeführte elektrische Energie im Zähler stehen und der zusätzliche Kraftstoffverbrauch im Nenner oder umgekehrt. Steht die zugeführte elektrische Energie im Zähler, so ist folglich das Ergebnis des Quotienten größer, wenn die Eignung als Fahrzustand zum Laden des Energiespeichers besser ist.

In bevorzugter Ausgestaltung wird die zugeführte elektrische Energiemenge noch mit einem Gewichtungsfaktor gewichtet. Der Gewichtungsfaktor kann bei manchen Ausführungsbeispielen dafür sorgen, dass der Anteil an gefahrener Strecke, der rein elektrisch gefahren wird, erhöht wird. Dies geschieht zum Beispiel dadurch, dass die zugeführte elektrische Energiemenge durch den Gewichtungsfaktor "künstlich" erhöht oder erniedrigt wird.

Bei manchen Ausführungsbeispielen wird der Quotient aus zusätzlich aufzuwendenden Kraftstoff für die Verbrennungskraftmaschine und die zugeführte elektrische Energiemenge zum Laden des Energiespeichers nach folgender Formel ermittelt:

$$Q_{CH} = \frac{\Delta e^{q_{EV}}}{\Delta b} \qquad (2)$$

wobei $Q_{CH}$ die Eignung für den Fahrzustand angibt, bei dem der Energiespeicher elektrisch geladen wird, $\Delta e$ die zum Laden zugeführte elektrische Energiemenge pro Normstrecke (z.B. 1 km oder 100 km) angibt, wobei der Parameter $q_{EV}$ im Exponenten zum Erhöhen/Verringern des Anteils (Gewichtung) der zugeführten elektrischen Energiemenge dient, und $\Delta b$ den zusätzlichen Kraftstoffverbrauch pro Normstrecke angibt, der zum Bereitstellen der zugeführten elektrischen Energiemenge dient. Ist $q_{EV}$ kleiner als 1, so wird künstlich die zugeführte elektrische Energiemenge erniedrigt, ist der Gewichtungsfaktor $q_{EV}$ gleich 1, so ist er neutral, und ist der Gewichtungsfaktor $q_{EV}$ größer als 1, so wird die zugeführte elektrische Energiemenge erhöht.

Der Gewichtungsfaktor $q_{EV}$ ist in einer bevorzugten Ausgestaltung beispielsweise identisch zum Gewichtungsfaktor, wie er in Gleichung (1) beschrieben ist, bzw. der Gewichtungsfaktor ist derselbe, der zum Beeinflussen der Eignung zum rein elektrischen Fahren verwendet wird, wie es oben beschrieben wurde. Bei manchen Ausführungsbeispielen unterscheidet sich aber der Gewichtungsfaktor zum Beeinflussen des Stromverbrauches von dem Gewichtungsfaktor zum Beeinflussen der zugeführten elektrischen Energiemenge.

In bevorzugter Ausgestaltung umfasst das Verfahren zusätzlich den Schritt des Empfangens von fahrzeugbezogenen Daten, die charakteristisch für einen elektrischen Energieverbrauch des Hybridfahrzeugs sind, wobei das Ermitteln des Eignungsparameters zusätzlich auf den empfangenen fahrzeugbezogenen Daten basiert. Solche fahrzeugbezogenen Daten können z.B. von einem Energiemanagement des Hybridfahrzeugs stammen. Die fahrzeugbezogenen Daten können Informationen über eingeschaltete Stromverbraucher und/oder den Stromverbrauch von Stromverbrauchern im Hybridfahrzeug umfassen. Bei manchen Ausführungsbeispielen umfassen die fahrzeugbezogenen Daten auch Informationen über einen zu erwartenden Stromverbrauch oder ein zu erwartender Stromverbrauch ist aus den fahrzeugbezogenen Daten ableitbar.

Die fahrzeugbezogenen Daten können z.B. Informationen darüber enthalten, dass ein Scheibenwischer eingeschaltet ist, dass eine Heckscheibenheizung eingeschaltet ist, dass eine Sitzheizung eingeschaltet ist, dass das Licht (Abblendlicht, Fernlicht, Standlicht, etc.) eingeschaltet ist usw. und/oder sie können Informationen über den Stromverbrauch solcher elektrischen Stromverbraucher enthalten. Darüber hinaus können die fahrzeugbezogenen Daten auch Informationen enthalten, aus denen ein Stromverbrauch ableitbar ist. So ist z.B. je nach Uhrzeit zu erwarten, dass das Abblendlicht eingeschaltet wird und je nach Streckensegment auch das Fernlicht. Zum Beispiel wird bei einem Streckensegment, das in einer Stadt liegt, aus rechtlichen Gründen normalerweise kein Fernlicht eingeschaltet, während es auf der Landstraße eingeschaltet werden kann. Außerdem können die fahrzeugbezogenen Daten Informationen über eine Betriebstemperatur der Verbrennungskraftmaschine enthalten, sodass z.B. bei kalter Betriebstemperatur für die ersten Streckensegmente angenommen werden kann, dass der Verbrennungskraftmotor nicht ausgeschaltet wird, damit dieser erst einmal warm läuft und dass außerdem elektrische Verbraucher, die elektrische Energie in Wärme umwandeln, eingeschaltet werden (z.B. eine Sitzheizung, Heckscheibenheizung oder dergleichen). So kann zum Beispiel bei Feststellen einer Außentemperatur von unter 10 °C und einer Verbrennungskraftmaschinentemperatur von unter 10 °C davon ausgegangen werden, dass eine Heizung und/oder eine Sitzheizung vom Benutzer des Hybridfahrzeugs eingeschaltet werden. Daher ist es unabhängig davon, dass vielleicht die ersten Streckensegmente grundsätzlich sehr gut für rein elektrisches Fahren geeignet wären, wie z.B. Streckensegmente, die in der Stadt liegen und auf denen Stau herrscht), möglich, die ersten Streckensegmente als ungeeignet für den rein elektrischen Fahrzustand zu kennzeichnen.

In einer weiteren bevorzugten Ausgestaltung sind mehrere Streckentypen vorgegeben und das Ermitteln des Eignungsparameters umfasst das Zuordnen der Streckensegmente jeweils zu einem Streckentyp. Streckentypen können, wie es auch weiter oben bereits ausgeführt wurde, anhand unterschiedlicher Durchschnittsgeschwindigkeiten und /oder anhand von vorgegeben Steigungen unterschieden werden. So können Streckentypen z.B. den Typ "Stadt" umfassen, der z.B. unterteilt ist und verkehrsberuhigte Zone, 30-km/h-Zonen, 50-km/h-Zonen, 60-km/h-Zonen, Stadtautobahnen oder dergleichen, den Typ "Landstraße", der unterteilt sein kann in einen Typ mit positiver Steigung, bei der das Hybridfahrzeug bergauf fährt und in einen Typ mit negativer Steigung, bei der das Hybridfahrzeug bergab fährt und in einen Typ "Ebene", in der es weder eine positive noch eine negative Steigung gibt; den Typ "Autobahn", der auch unterteilt sein kann in einen Typ mit positiver Steigung, bei der das Hybridfahrzeug bergauf fährt und in einen Typ mit negativer Steigung, bei der das Hybridfahrzeug bergab fährt und in einen Typ "Ebene", in der es weder eine positive noch eine negative Steigung gibt; den Typ Umweltzone, in der keine Abgase ausgestoßen werden dürfen (Null-Emissions-Zone); und bei Vorliegen von z.B. Verkehrsinformationsdaten, den Typ "Stau", usw.

Durch das Vorgeben von Streckentypen kann die Ermittlung des Eignungsparameters vereinfacht werden, da zunächst die Streckensegmente je nach Streckentyp gruppiert werden können. Dementsprechend wird für jeweils einen der Streckentypen ein Eignungsparameter ermittelt, wodurch dann gleichzeitig für jedes Streckensegment, das einem entsprechenden Streckentyp zugeordnet wurde, der entsprechende Eignungsparameter ermittelt wird. Bei manchen Ausführungsbeispielen wird folglich jedem Streckensegment, das einem bestimmten Streckentyp zugeordnet wurde, der Eignungsparameter, der für den Streckentyp ermittelt wird, zugeordnet. Dadurch kann der Rechenaufwand stark vereinfacht werden, da der Eignungsparameter nur für jeden Streckentyp ermittelt werden muss, da jedem Streckensegment, das unter dem jeweiligen Streckentyp eingruppiert ist, automatisch der für den Streckentyp ermittelte Eignungsparameter zugeordnet wird.

Bevorzugt ist folglich vorgesehen, dass, statt für jedes Streckensegment einzeln den Eignungsparameter zu ermitteln, für die unterschiedlichen Streckentypen jeweils der Eignungsparameter ermittelt und dadurch für die Gruppe der Streckensegmente, die dem jeweiligen Streckentyp zugeordnet sind.

In bevorzugter Ausgestaltung können der Kraftstoffverbrauch, der Stromverbrauch, der zusätzliche Kraftstoffverbrauch und/oder die zugeführte elektrische Energiemenge pro Normstrecke (z.B. 1 km oder 100 km) aus einer Fahrthistorie des Hybridfahrzeugs ermittelt werden und/oder auf Basis eines Fahrzeug-/Antriebsstrangmodells. Dazu können z.B. aus der Fahrthistorie der Kraftstoffverbrauch, der Stromverbrauch, der zusätzliche Kraftstoffverbrauch und/oder die zugeführte elektrische Energiemenge für bereits gefahrene Streckensegmente und/oder Streckentypen ermittelt werden und so auf eine Normstrecke bezogen bestimmt werden. Auf diese Art und Weise können für verschiedene Streckentypen und/oder verschiedene Streckensegmente der Kraftstoffverbrauch, der Stromverbrauch, der zusätzliche Kraftstoffverbrauch und/oder die zugeführte elektrische Energiemenge spezifisch für das Hybridfahrzeug ermittelt werden.

An dieser Stelle gibt das Verfahren bei manchen Ausführungsbeispielen ein Datenarray aus, das für jedes einzelne Streckensegment z.B. den Eignungsparameter für den rein elektrischen Fahrzustand und/oder den Fahrzustand zum Laden des Energiespeichers repräsentiert und/oder die elektrische Energiemenge die pro Streckensegment zum Laden des Energiespeichers erhalten und/oder verbraucht wird. Außerdem kann das Datenarray für jedes Streckensegment die Streckensegmentlänge enthalten.

In bevorzugter Ausgestaltung umfasst das Verfahren das Berechnen einer Betriebsstrategie für das Hybridfahrzeug für die vorausliegende Fahrstrecke. Ziel dieses Verfahren ist es, aus der Energiebilanzsicht möglichst effizient auf der vorausliegenden Fahrstrecke im rein elektrischen Fahrzustand zu fahren, d.h. die im elektrischen Energiespeicher gespeicherte elektrische Energie möglichst vollständig auszunutzen. Bevorzugt wird ferner ein Zielladezustand vorgegeben, den der Energiespeicher nach Absolvieren der vorausliegenden Fahrstrecke vorzugsweise haben soll. Der Zielladezustand definiert einen leeren Energiespeicher oder einen minimalen Ladezustand, den der Energiespeicher am Ende der vorausliegenden Fahrstrecken haben soll. Die Betriebsstrategie versucht dann den Zustand des rein elektrischen Fahrens so auf die Streckensegmente zu verteilen, dass nach Absolvieren der vorausliegenden Fahrstrecke der vorgegebene Zielladezustand des Energiespeichers erreicht ist.

Ein anderes Ziel ist es, möglichst lange im Fahrzustand rein elektrisch zu fahren, um einem Nutzer des Hybridfahrzeugs möglichst lange das Fahrgefühl des rein elektrischen Fahrens zu ermöglichen. Dies wird, wie oben auch schon ausgeführt, z.B. durch entsprechende Vorgabe des Gewichtungsparameters $q_{EV}$ erreicht, durch den Streckensegmente, bei denen zwar aus Energiebilanzsicht der rein elektrische Fahrzustand sinnvoll ist (z.B. Streckensegment in der Stadt auf dem Stau herrscht), für das Verfahren als weniger für den rein elektrischen Fahrzustand geeignet angesehen werden und einen entsprechend "schlechteren" Ereignisparameterwert bekommen.

Für die Berechnung der Betriebsstrategie wird in einem ersten Schritt das oben genannte Datenarray erhalten. In einem nächsten Schritt werden alle Streckensegmente der vorausliegenden Fahrstrecke als mit einem vorgegebenen Fahrzustand zu durchfahren gekennzeichnet. Dies kann z.B. der Fahrzustand sein, der den Ladezustand des Energiespeichers erhält und bei dem typischerweise die Verbrennungskraftmaschine beim Antreiben des Hybridfahrzeugs mitwirkt. Ein solcher Fahrzustand wird auch als hybridischer Fahrzustand bezeichnet.

In einem nächsten Schritt wird dann z.B. mit der Ermittlung begonnen, welches oder welche der Streckensegmente der vorausliegenden Fahrstrecke zum Fahren im rein elektrischen Fahrzustand geeignet sind. Dabei kann mit dem Eignungsparameterwert begonnen werden, der die beste Eignung für den rein elektrischen Fahrzustand widerspiegelt (z.B. "1" im oben erklärten Beispiel). Das Verfahren überprüft dann für jedes Streckensegment, ob für es im Datenarray der für den rein elektrischen Fahrzustand beste Ereignisparameter gespeichert ist oder nicht. Wenn dies der Fall ist, wird das betrachtete Streckensegment als im rein elektrischen Fahrzustand zu fahren gekennzeichnet.

Das Verfahren ermittelt an dieser Stelle, ob die elektrische Energiemenge in einem virtuellen elektrischen Energiespeicher ausreicht, um das Streckensegment rein elektrisch zu durchfahren. Der Energiespeicherladezustand des virtuellen Energiespeichers wird dann um die elektrische Energiemenge (virtuell) verringert werden, die für das Durchfahren des betrachteten Streckensegments benötigt wird. Dazu ermittelt das Verfahren z.B. aus dem Datenarray entweder den Streckentyp, zu dem das betrachtete Streckensegment zugeordnet ist, und liest einen zugehörigen durchschnittlichen Stromverbrauch für den ermittelten Streckentyp aus und/oder es ermittelt aus dem Datenarray die elektrische Energiemenge die für das Streckensegment in dem Datenarray gespeichert ist. Da das Verfahren die Länge des betrachteten Streckensegments aus dem Datenarray kennt, kann der Stromverbrauch auf dem betrachteten Streckensegment ermittelt werden und damit kann ermittelt werden, um welche elektrische Energiemenge der Ladezustand des virtuellen Energiespeichers beim Durchfahren des betrachteten Streckensegments im rein elektrischen Fahrzustand verringert wird. Der virtuelle Energiespeicher bildet den realen Energiespeicher ab und simuliert den Ladzustand des realen Energiespeichers, sodass bei der Berechnung der Betriebsstrategie der Ladezustand des Energiespeichers mit Hilfe des virtuellen Energiespeichers simuliert werden kann. Zu Beginn der Berechnung der Betriebsstrategie hat der virtuelle Energiespeicher den Ladezustand des (realen) Energiespeichers des Hybridfahrzeugs.

Das Verfahren fährt fort, bis alle Streckensegmente der vorausliegenden Fahrstrecke betrachtet wurden und/oder bis der virtuelle Ladezustand des Energiespeichers soweit abgesunken ist, dass das aktuell betrachtete Streckensegment nicht durchfahren werden kann, ohne den Zielladezustand des Energiespeichers zu unterschreiten. Wenn noch elektrische Energie in dem virtuellen elektrischen Energiespeicher vorhanden ist, wird das Verfahren von vorne beginnen, die Streckensegmente zu betrachten, wobei nun diejenigen als im rein elektrischen Fahrzustand zu durchfahren gekennzeichnet werden, für die der nächstbeste Eignungsparameter im Datenarray gespeichert ist (im obigen Beispiel "2"). Ist danach immer noch elektrische Energie im virtuellen Energiespeicher vorhanden, so kommen die Streckensegment mit dem drittbesten Eignungsparameter an die Reihe usw.

Bevorzugt ist vorgesehen, dass dann, wenn das Verfahren feststellt, dass ein Streckensegment nicht mehr rein elektrisch durchfahren werden kann, ohne dass der Ladzustand des virtuellen Energiespeichers unter den Zielladezustand fällt, überprüft werden, welche Streckensegmente für einen Fahrzustand geeignet sind, bei dem der Energiespeicher geladen wird. Dazu werden die Streckensegmente, die noch nicht für das rein elektrische Fahren gekennzeichnet sind, untersucht, ob für sie der Eignungsparameter gespeichert ist, der die beste Eignung für den Fahrzustand, bei dem der Energiespeicher geladen wird, angibt. Wird ein solche Streckensegment gefunden, so wird der virtuelle Energiespeicher um die elektrische Energiemenge erhöht, die beim Durchfahren des betrachteten Streckensegments erzeugt zu dem Energiespeicher zugeführt wird.

Danach kann das Verfahren wieder in den Zustand zurückgehen, in denen die Streckensegmente auf ihre Eignung hin untersucht werden, ob sie im rein elektrischen Fahrzustand durchfahren werden können, wie es oben ausgeführt wurde. Sobald der Ladzustand des virtuellen Energiespeichers wiederum so niedrig ist, dass ein betrachtetes Streckensegment nicht mehr rein elektrisch durchfahren werden kann, springt das Verfahren wieder in den Zustand, in dem es nach Streckensegmenten sucht, die für den Fahrzustand geeignet sind, in dem der Energiespeicher geladen wird.

In bevorzugter Ausgestaltung fährt das Verfahren solange fort, bis alle Streckensegmente betrachtet wurden und keine weiteren Streckensegmente mehr gefunden werden, die für den rein elektrischen Fahrzustand und für den Fahrzustand, bei dem der Energiespeicher geladen wird, geeignet sind.

In bevorzugter Ausgestaltung werden auch Ladestationen in Streckensegmenten der vorausliegenden Fahrstrecke und das Aufladen des Energiespeichers berücksichtigt. Ein Streckensegment, bei dem der Energiespeicher durch eine Ladestation aufgeladen wird, kann dabei genauso berücksichtigt werden, wie ein Streckensegment, das als am besten für einen Fahrzustand zum Laden des Energiespeichers ermittelt wurde. Auch hier kann die zugeführte elektrische Energiemenge, die den Ladezustand des (virtuellen) Energiespeichers entsprechend erhöht, ermittelt und in die Berechnung der Betriebsstrategie miteinbezogen werden.

Bei diesem beispielhaft beschriebenen Verfahren ist am Ende jedes Streckensegment als im rein elektrischen Fahrzustand zu durchfahren oder als im Fahrzustand zu durchfahren, bei dem der Energiespeicher geladen wird, oder als im hybridischen Fahrzustand zu durchfahren gekennzeichnet, bei dem der Ladezustand erhalten wird.

Auf diese Art und Weise kann die im Energiespeicher gespeicherte elektrische Energie und die beim Durchfahren der vorausliegenden Strecke voraussichtlich gewonnene elektrische Energie optimal zum Fahren im rein elektrischen Fahrzustand genutzt werden.

Das oben ausgeführte Verfahren wird bevorzugt zur Berechnung der Betriebsstrategie kontinuierlich ausgeführt, d.h. auch während des Durchfahrens der vorausliegenden Fahrstrecke. Dadurch können Ereignisse miteinbezogen werden, die zum Beispiel beim Berechnen der Betriebsstrategie des Hybridfahrzeugs noch nicht bekannt waren. Solche Ereignisse können zum Beispiel ungeplante Stopps sein, ein Stau, ein Aufladen des Energiespeichers an einer Ladestation, eine Abweichung von der Fahrstrecke oder dergleichen.

Innerhalb des Verfahrens wird bevorzugt auf Grundlage der berechneten Betriebsstrategie ein aktueller Soll-Fahrzustand für das gerade befahrene und/oder das nächste zu befahrende Streckensegment der vorausliegenden Fahrstrecke während des Betriebs des Hybridfahrzeugs und/oder während des Durchfahrens der vorausliegenden Fahrstrecke ermittelt. Wie oben erwähnt, liefert die Berechnung der Betriebsstrategie für jedes Streckensegment der vorausliegenden Fahrstrecke eine Zuweisung, ob das Streckensegment im rein elektrischen Fahrzustand, in dem den Energiespeicher ladenden Fahrzustand oder dem hybridischen Fahrzustand, der den Ladezustand des Energiespeichers erhält, zu durchfahren ist. Der aktuelle Fahrzustand des Hybridfahrzeugs kann dabei aber von einer anderen Funktion überstimmt werden.

So können z.B. motornahe Funktionen bestimmen, dass die Verbrennungskraftmaschine nicht ausgeschaltet werden darf, da sie sich z.B. in einer Warmlaufphase befindet, gerade eine Diagnosefunktion der Verbrennungskraftmaschine läuft oder dergleichen. In solchen Fällen kann z.B. ein Streckensegment, das als im rein elektrischen Fahrzustand zu durchfahren von der Betriebsstrategie gekennzeichnet wurde, z.B. hybridisch durchfahren werden. Eine motornahe Funktion kann z.B. anhand der Motorlaufzeit der Verbrennungskraftmaschine ermitteln, ob diese oberhalb eines Mindestlaufzeitwertes liegt und falls dem nicht so ist, bestimmen, dass die Verbrennungskraftmaschine nicht ausgeschaltet werden darf und folglich ein Streckensegment, das als im rein elektrischen Fahrzustand zu durchfahren gekennzeichnet ist, hybridisch gefahren werden muss.

In bevorzugter Ausgestaltung werden auch Antriebsstrangdaten analysiert anhand derer z.B. entschieden wird, dass ein Streckensegment nicht rein elektrisch, sondern hybridisch durchfahren wird. Zum Beispiel kann eine Motortemperatur in den Antriebsstrangdaten enthalten sein und wenn ermittelt wird, dass die Motortemperatur unterhalb einer Mindesttemperatur liegt, kann bestimmt werden, dass z.B. ein Streckensegment nicht rein elektrisch durchfahren wird, da aufgrund der zu niedrigen Motortemperatur die Verbrennungskraftmaschine nicht abgeschaltet werden darf.

In bevorzugter Ausgestaltung wird zum Beispiel auch eine Außentemperatur und/oder eine Innentemperatur ermittelt. Wenn zum Beispiel die Außen- und/oder Innentemperatur unterhalb eines Schwellwerts liegt und außerdem die Motortemperatur unterhalb eines Schwellwerts liegt, kann ein als im rein elektrischen Fahrzustand zu durchfahrendes Streckensegment hybridisch durchfahren werden, da angenommen wird, dass zunächst der Innenraum des Hybridfahrzeugs für den Nutzer aufgewärmt werden soll. Folglich ist es sinnvoll, zunächst die Verbrennungskraftmaschine solange zu betreiben, bis die Betriebstemperatur der Verbrennungskraftmaschine erreicht ist und/oder die Innentemperatur einen Zielwert, z.B. 21 °C erreicht hat, da das Aufwärmen des Innenraumes nur mit elektrischer Energie ohne Betreiben der Verbrennungskraftmaschine und der Nutzung der Abwärme der Verbrennungskraftmaschine, sehr viel elektrische Energie verbraucht, die dann später zum Fahren im rein elektrischen Fahrzustand fehlt.

Bevorzugt führen erfindungsgemäß auch Streckendaten, die die unmittelbar vorausliegenden Streckensegmente betreffen, zum Ändern des Fahrzustands. So kann z.B. eine Umleitung, die den Streckenverlauf verändert, oder ein Stau, der beim Berechnen der Betriebsstrategie noch nicht bekannt war, das nicht geplante Ändern der Fahrstrecke durch den Führer des Hybridfahrzeugs oder dergleichen zu einer Änderung des Fahrzustands führen.

Außerdem wird in einer bevorzugten Ausgestaltung ermittelt, ob z.B. die Fahrzustände von Streckensegmenten getauscht werden sollen. Zum Beispiel wird aus der Vorgabe der Mindestlaufzeit der Verbrennungskraftmaschine ermittelt, ob ein in der vorausliegenden Fahrstrecke späteres Streckensegment, das eigentlich im rein elektrischen Fahrzustand zu durchfahren ist, aufgrund der Anforderung einer Mindestlaufzeit der Verbrennungskraftmaschine hybridisch durchfahren werden muss. In einem solchen Fall wird ein in der vorausliegenden Fahrstrecke früher zu durchfahrenes Streckensegment, das hybridisch durchfahren werden soll, stattdessen im rein elektrischen Fahrzustand durchfahren, um die Gesamtstrecke bzw. die Gesamtdauer, die im rein elektrischen Fahrzustand durchfahren werden soll, zu verlängern.

Aus den vorangegangen Anforderungen kann das Verfahren folglich einen aktuellen Soll-Fahrzustand ermitteln, mit dem das Hybridfahrzeug dann das aktuell zu durchfahrende Streckensegment durchfährt.

In anderen bevorzugten Ausgestaltungen greifen auch andere Verfahren in die Bestimmung des aktuellen Fahrzustandes ein. Zum Beispiel werden Verfahren eingesetzt, die für den Ladezustand des Energiespeichers auf Grundlage aktueller Fahrzeugdaten einen anderen Fahrzustand festlegen oder optimieren, als es nach der oben ausgeführten berechneten Betriebsstrategie der Fall wäre. Dies kann z.B. dann auftreten, wenn aus Sicht des Verfahrens zur Optimierung des Ladezustandes des Energiespeichers energetisch ungünstige Zustände eingestellt werden müssten. Um dies festzustellen wird immer nach dem Verfahren zur Optimierung des Ladezustandes des Energiespeichers zum Beispiel ein Toleranzband festgelegt, innerhalb dessen der Ladezustand variieren darf, sodass es nur eingreift, wenn der Ladezustand das Toleranzband verlassen würde.

In einer bevorzugten Ausgestaltung werden die berechnete Betriebsstrategie und/oder der Ladzustand des Energiespeichers visuell auf einer Anzeige dargestellt, wobei als Anzeige z.B. die Anzeige eines Navigationsgerätes oder eines Kombigerätes im Hybridfahrzeug dient. Die visuelle Darstellung kann dabei die Streckensegmente visualisieren und dabei angeben, in welchem Fahrzustand das Streckensegment durchfahren werden soll. Dies wird durch unterschiedliche Farbgebung oder unterschiedliche Zeichen, etc., realisiert. Dadurch kann dem Fahrer des Hybridfahrzeugs auch visuell gezeigt werden, wann z.B. der Fahrzustand von einem rein elektrischen Fahrzustand in einen hybridischen Fahrzustand umgeschaltet wird. Es können auch noch weitere Informationen angegeben werden, wie z.B. der aktuelle Ladezustand des Energiespeichers, der geschätzte Endladezustand des Energiespeichers nach Absolvieren der gesamten Fahrstrecke, Ladestationen auf der Fahrstrecke, usw.

In bevorzugter Ausgestaltung ist vorgesehen, dass ein Nutzer des Hybridfahrzeugs die zu fahrende Fahrstrecke in einem Navigationsgerät oder einem Kombigerät des Hybridfahrzeugs durch eine direkte Eingabe oder einen Schieberegler oder dergleichen eingibt.

In bevorzugter Ausgestaltung wird die Segmentierung der vorausliegenden Fahrstrecke und/oder die Art und Anzahl der Streckentypen verändert werden bzw. an eine vorgegebene Rechenleistung einer Steuerung, in der das Verfahren abläuft, angepasst werden, d.h. ein verwendetes Rechenraster für die Segmentierung und/oder eine Granularität der Streckentypen ist anpassbar. Zum Beispiel ist die Anzahl der Streckensegmente und/oder die Anzahl der Streckentypen bei einer höheren vorliegenden Rechenleistung größer als, bei einer niedrigen Rechenleistung. Dadurch ist die Genauigkeit der Ermittlung von Fahrzuständen für einzelne Streckensegmente anpassbar und damit ist auch die Genauigkeit der Berechnung der Betriebsstrategie skalierbar bzw. anpassbar an verfügbare Ressourcen der Steuerung und/oder an die Genauigkeit der verfügbaren Streckeninformationen, wie Strecken- und Infrastrukturdaten, etc.

Durch die Diskretisierung und genaue Unterscheidung der einzelnen Fahrzustände wird die Optimierung der Verwendung der unterschiedlichen Fahrzustände auf der vorausliegenden Fahrstrecke dem Nutzer des Hybridfahrzeugs dargestellt und damit für ihn nachvollziehbar und plausibel gemacht.

Bevorzugt sind die Ermittlung des Eignungsparameters für die Streckensegmente und/oder die Berechnung der Betriebsstrategie, bei der jedem Streckensegment auf Grundlage des Eignungsparameters ein Fahrzustand zugeordnet wird, und/oder die Bestimmung des aktuellen Soll-Fahrzustandes, bei der kurzfristige Anforderungen, die bspw. aus motornahen Funktionen kommen, eigenen eindeutig definierten Schnittstellen zugeordnet und diese können bspw. auch parallelisiert werden, um die Geschwindigkeit zu erhöhen und/oder es können unterschiedliche Rechenraster und damit unterschiedliche Genauigkeiten verwendet werden.

In bevorzugter Ausgestaltung startet das oben beschriebene Verfahren mit der Bewertung der Streckensegmente immer vom Hybridfahrzeug aus und folglich mit dem frühesten/nächsten Streckensegment der vorausliegenden Fahrstrecke. Dadurch bekommt das früheste oder nächste Streckensegment automatisch eine stärkere Gewichtung. Dies ist bei manchen Ausführungsbeispielen sinnvoll, da die Güte der Vorhersage eines geeigneten Fahrzustandes für ein Streckensegment abnehmen kann, je weiter entfernt das Streckensegment von dem ersten zu durchfahrenen Streckensegment der vorausliegenden Fahrstrecke ist.

Manche Ausführungsbeispiele betreffen ein Hybridfahrzeug, wie es oben bereits beschrieben wurde, mit einer Verbrennungskraftmaschine, einer Elektromaschine, einem elektrischen Energiespeicher zur Versorgung der Elektromaschine mit elektrischer Energie und einer Steuerung, wobei die Steuerung dazu eingerichtet ist, das oben beschriebene Verfahren wenigstens teilweise auszuführen. In bevorzugter Ausgestaltung umfasst das Hybridfahrzeug auch eine Anzeige, die bspw. Bestandteil eines Navigationsgerätes oder eines Kombigerätes ist, wie es auch oben ausgeführt wurde. Die Steuerung weist bevorzugt einen Mikroprozessor auf und einen Speicher, der bevorzugt als Festwert- und/oder flüchtiger Speicher ausgestaltet ist.

Ausführungsbeispiele der Erfindung werden nun beispielhaft und unter Bezugnahme auf die beigefügte Zeichnung beschrieben, in der:

Fig. 1 schematisch ein Ausführungsbeispiel eines Hybridfahrzeugs;

Fig. 2 schematisch eine Steuerung für das Hybridfahrzeug von Fig. 1 zeigt;

Fig. 3 ein Ausführungsbeispiel eines Verfahrens zur Ermittlung eines Fahrzustands des Hybridfahrzeugs veranschaulicht;

Fig. 4 eine in Streckensegmente unterteilte vorausliegende Fahrstrecke zeigt,

Fig. 5 einen Prozess zum Ermitteln eines Eignungsparameters zeigt;

Fig. 6 einen Prozess zum Zuordnen eines Fahrzustands zu den Streckensegmenten der vorausliegenden Fahrstrecke zeigt;

Fig. 7 einen Teil des Prozesses von Fig. 6 zeigt, bei dem ein rein elektrischer Fahrzustand zugeordnet wird;

Fig. 8 einen Teil des Prozesses von Fig. 6 zeigt, bei dem untersucht wird, ob ein Streckensegment für einen Fahrzustand geeignet ist, bei dem der Energiespeicher geladen wird; und

Fig. 9 einen Teil des Prozesses von Fig. 6 zeigt, bei dem einem Streckensegment der Fahrzustand zum Laden des Energiespeichers zugeordnet wird.

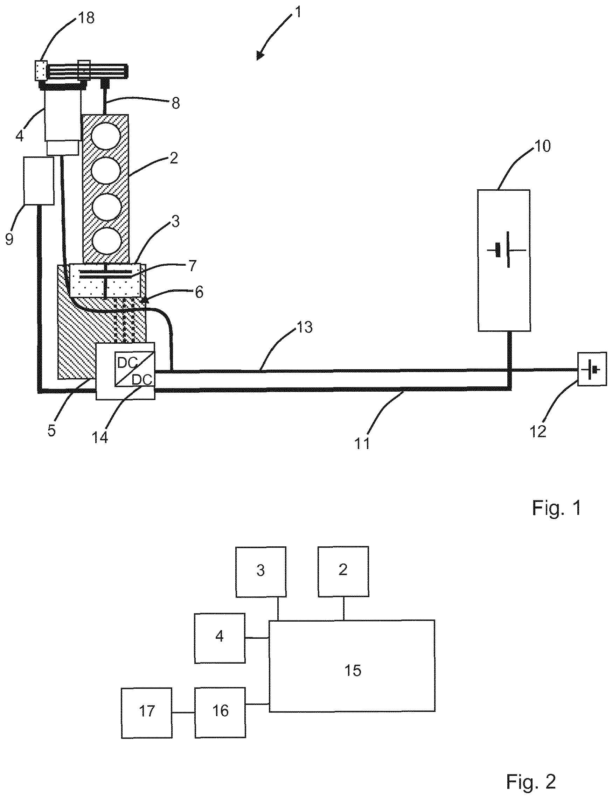

Ein Ausführungsbeispiel eines Hybridfahrzeugs mit einem Triebstrang 1 ist in Fig. 1 veranschaulicht. Bei dem vorliegenden Ausführungsbeispiel handelt es sich um einen sogenannten Parallelhybrid, bei dem auf einer Getriebeeingangswelle sowohl eine Verbrennungskraftmaschine 2 als auch eine Elektromaschine 3 angeordnet sind, ohne dass die vorliegende Erfindung darauf beschränkt sein soll.

Die Getriebeeingangswelle mündet in ein automatisches Doppelkupplungsgetriebe 5 mit Fahrkupplungen 6, die die Verbrennungskraftmaschine 2 und die Elektromaschine 3 an wenigstens ein Antriebsrad koppeln, sodass ein von der Verbrennungskraftmaschine 2 und/oder Elektromaschine 3 erzeugtes Antriebsmoment entsprechend auf das wenigstens eine Antriebsrad übertragen wird.

Die Verbrennungskraftmaschine 2 und die Elektromaschine 3 sind über eine Trennkupplung 7 miteinander koppelbar. Außerdem ist ein Riemen-Starter-Generator 4 mit Hilfe eines Doppelriemenspanners 18 über eine Achse 8 mit der Verbrennungskraftmaschine 2 gekoppelt. Ferner zeigt Fig. 1 beispielhaft eine Klima-Kompressor-Einheit 9, die ebenfalls zum Triebstrang 1 gehört.

Ein (Hochvolt-)Energiespeicher 10 ist über ein Hochvolt-Bordnetz 11 mit der Elektromaschine 3 und der Klima-Kompressor-Einheit 9 elektrisch gekoppelt. Der Energiespeicher 10 ist als Lithium-Ionen-Batterie ausgestaltet. Außerdem ist eine 12 V-Batterie 12 über ein 12 V-Bordnetz 13 mit dem Riemen-Starter-Generator 4 gekoppelt. Zum Umwandeln der Spannungen des Hochvoltnetzes 11 auf die Spannung des 12 V-Bordnetzes 13 ist ein Gleichspannungswandler 14 zwischen dem 12 V-Bordnetz 13 und dem Hochvolt-Bordnetz 11 gekoppelt.

Fig. 2 veranschaulicht schematisch eine Steuerung 15, die zur Steuerung des Hybridfahrzeugs und insbesondere auch zur Steuerung des Triebstrangs 1 ausgelegt ist und die dazu eingerichtet ist, die hierin beschriebenen Verfahren wenigstens teilweise auszuführen.

Die Steuerung 15 ist mit den einzelnen anzusteuernden Komponenten des Triebstranges 1 verbunden, wie z.B. mit der Verbrennungskraftmaschine 2, der Elektromaschine 3 und dem Riemen-Starter-Generator 4. Außerdem ist hier, ohne dass die vorliegende Erfindung darauf eingeschränkt sein soll, die Steuerung 15 mit einem Navigationskombigerät 16 gekoppelt, das eine Anzeige 17 aufweist. Die Verbindung zwischen der Steuerung 15 und den einzelnen anzusteuernden Komponenten des Triebstranges 1 und die Verbindung zum Navigationskombigerät 16 sind hier nur logisch zu verstehen und nicht als tatsächliche, physikalische Verbindung.

Ähnliches gilt für die Steuerung 15 selbst, die in den Ausführungsbeispielen eine Vielzahl von Steuerungen bzw. Steuerelementen umfassen kann, um die einzelnen hierin beschriebenen Steuerungsaufgaben und Verfahrensschritte umzusetzen.

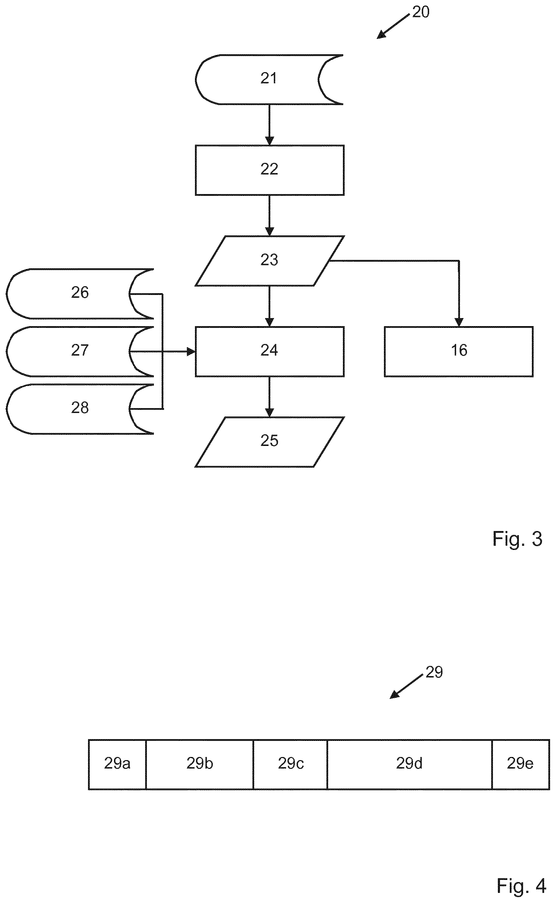

Ein Verfahren 20 zum Ermitteln eines Fahrzustandes für eine vorausliegende Fahrstrecke, die in Streckensegmente unterteilt ist, und die von einem Hybridfahrzeug befahren wird, wie es im Zusammenhang mit Fig. 1 erläutert wurde, ist in Fig. 3 gezeigt. Das Verfahren kann auf einer Steuerung 15 ablaufen, wie sie im Zusammenhang mit Fig. 2 erläutert wurde.

Zunächst werden Streckendaten 21 empfangen, die eine vorausliegende Fahrstrecke 29 (Fig. 3) repräsentieren und außerdem Streckeninformationen über die vorausliegende Fahrstrecke 29 enthalten. Die Fahrstrecke 29 ist in mehrere Streckensegmente 29a, 29b, 29c, 29d, 29e unterteilt. Die Streckendaten 21 stammen hier bspw. aus dem Navigationskombigerät 16, in das ein Nutzer des Hybridfahrzeugs die mit dem Hybridfahrzeug zu fahrende vorausliegende Fahrstrecke 29 eingegeben hat. Wie Fig. 3 entnehmbar ist, haben die Streckensegmente 29a-e unterschiedliche Längen. Wie auch schon weiter oben ausgeführt, sind die Streckensegmente 29a-e der vorausliegenden Fahrstrecke 29 anhand bestimmter Merkmale erstellt, wie z.B. Landstraße, Autobahn, Stadt, etc. und entsprechen vorgegebenen Streckentypen.

Beim vorliegenden Ausführungsbeispiel sind z.B. neun verschiedene Streckentypen festgelegt, anhand derer die vorausliegende Fahrstrecke 29 in die Streckensegmente 29a-e unterteilt ist:

- Autobahn (Ebene, positive (+) und negative (-) Steigung);
- Landstraße (Ebene, positive (+) und negative (-) Steigung);
- Stadt;
- Stau; und
- Umweltzone.

Die Streckendaten 21 enthalten Informationen über die jeweilige Länge der Streckensegmente 29a-e, über die Straßenklasse, Verkehrsbehinderungen, Steigung, lokale Besonderheiten, etc. anhand derer jedes Streckensegment der Streckensegmente 29a-e zuordnen kann. Bei manchen Ausführungsbeispielen enthalten die Streckendaten 21 auch bereits die Zuordnung zu den Streckentypen.

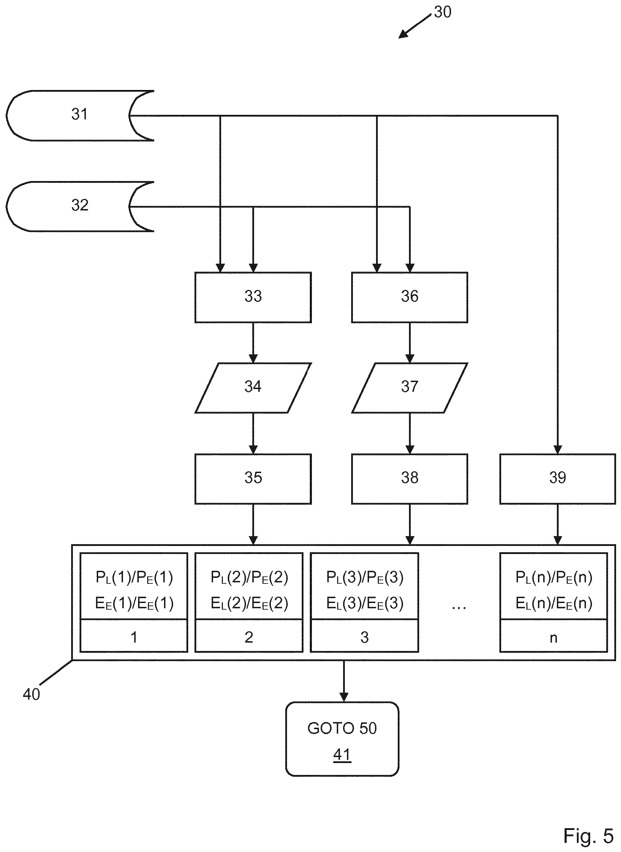

Mit den Streckendaten 21 erstellt ein Prozess 22, der weiter unten im Zusammenhang mit den Fig. 5 bis 9 beschrieben wird, eine Langstreckenoptimierung der vorausliegenden Fahrstrecke 29, wobei jedem der Streckensegmente 29a-e ein Fahrzustand zugeordnet wird. Dabei gibt es im Wesentlichen drei Fahrzustände:

I. Rein elektrischer Fahrzustand, bei dem die Verbrennungskraftmaschine 2 nicht das Hybridfahrzeug mit antreibt;

II. Hybridischer Fahrzustand, wobei der Ladezustand des Energiespeichers 10 gehalten wird; und

III. Hybridischer Fahrzustand, wobei der Energiespeicher 10 elektrisch geladen wird und dadurch der Ladezustand des Energiespeichers 10 erhöht wird.

Als Ergebnis der Langstreckenoptimierung 22 gibt das Verfahren 20 langstreckenoptimierte Streckendaten 23 aus. Die langstreckenoptimierten Streckendaten 23 werden an das Navigationsgerät 16 übertragen, welches die langstreckenoptimierten Streckendaten 23 auf seiner Anzeige 17 entsprechend darstellt. So kann auf der Anzeige 17 jedes Streckensegment 29a-e der vorausliegenden Fahrstrecke 29 dargestellt sein, wobei der vorgesehene Fahrzustand I, II oder III durch eine entsprechende farbliche Kennzeichnung des Streckensegments 29a-e dem Nutzer visualisiert wird. Die Anzeige 17 visualisiert außerdem den aktuellen und den Ladezustand des Energiespeichers 10 für die vorausliegende, zu absolvierende Fahrstrecke 29 sowie den geplanten Ladezustand des Energiespeichers 10 nach Absolvieren der vorausliegenden Fahrstrecke 29.

Die Langstreckenoptimierung 22 wird nach Beendigung wieder gestartet, damit z.B. während des Fahrens die Langstreckenoptimierung 22 aktuelle Änderungen berücksichtigt.

Das Verfahren 20 führt außerdem die langstreckenoptimierten Streckendaten 23 einem Prozess 24 zu, der einen aktuellen Soll-Fahrzustand berechnet. Dazu betrachtet der Prozess 24, der den aktuellen Soll-Fahrzustand berechnet, das aktuell befahrene Streckensegment und außerdem Streckendaten 26, die eine kurze Vorausschau widerspiegeln, Motorlaufzeitdaten 27 und Antriebsstrangdaten 28.

Die die kurze Vorausschau repräsentierenden Streckendaten 26 enthalten z.B. Informationen über das oder die nächstliegenden Streckensegmente, die zum Zeitpunkt der Erstellung der langstreckenoptimierten Streckendaten 23 noch nicht vorlagen. Dies können z.B. Verkehrsinformationen sein, dass ein Stau vorliegt oder auch Änderungen im Streckenverlauf, die durch eine geplante oder ungeplante Änderung der Fahrstrecke resultieren.

Die Motorlaufzeitdaten 27 enthalten Informationen darüber, wie lange die Verbrennungskraftmaschine 2 bereits gelaufen ist und noch laufen soll, sodass z.B. im gerade befahrenen Streckensegment oder im nächsten Streckensegment nicht rein elektrisch gefahren werden kann, da aufgrund zu kurzer Laufzeit der Verbrennungskraftmaschine 2 diese nicht für den rein elektrischen Fahrzustand abgeschaltet werden darf.

Ähnliche Informationen sind in den Antriebsstrangdaten 28 enthalten. Die Antriebsstrangdaten 28 enthalten Daten, die von motornahen Funktionen stammen, wie z.B. die Temperatur der Verbrennungskraftmaschine 2, oder auch Daten, dass die Verbrennungskraftmaschine 2 gerade einer Diagnose unterzogen wird oder dergleichen. Auch daraus kann der Prozess 24 zum Berechnen des aktuellen Soll-Fahrzustandes ableiten, dass z.B. das gerade befahrene oder eines der nächsten zu befahrenen Streckensegmente nicht im rein elektrischen Fahrzustand I durchfahren werden kann.

Wie oben schon ausgeführt kann der Prozess 24 zur Berechnung des aktuellen Soll-Fahrzustandes auch den Fahrzustand von Streckensegmenten verändern, wobei insbesondere eine Umwandlung des rein elektrischen Fahrzustandes I in einen hybridischen Fahrzustand II oder III und umgekehrt stattfindet. Wie oben ausgeführt, kann dies dann geschehen, wenn der Prozess 24 feststellt, dass z.B. die Verbrennungskraftmaschine 2 aufgrund der vorgegebenen Mindestlaufzeit ein rein zu elektrisch durchfahrenes Streckensegment voraussichtlich hybridisch durchfährt. In solchen Fällen kann der Prozess 24 entscheiden, dass das betreffende Streckensegment in ein hybridisch zu durchfahrendes Streckensegment umgewandelt wird und z.B. ein auf der vorausliegenden Fahrstrecke 29 später liegendes hybridisch zu durchfahrendes Streckensegment in ein rein elektrisch zu durchfahrendes Streckensegment umgewandelt wird.

Der Prozess 24 zur Berechnung des aktuellen Soll-Fahrzustandes liefert als Ergebnis einen aktuellen Soll-Fahrzustand 25, anhand dessen der aktuelle Soll-Fahrzustand des Hybridfahrzeugs von der Steuerung 15 eingestellt wird. Wie oben bereits erwähnt, können an dieser Stelle noch andere übergeordnete Funktionen eingreifen und einen anderen als den Soll-Fahrzustand 25 einstellen. Zum Beispiel kann eine Funktion, die den Ladezustand des Energiespeichers 10 überwacht, feststellen, dass der Ladezustand zu niedrig wird und folglich den rein elektrischen Fahrzustand I in einen hybridischen Fahrzustand II oder III umwandeln, etc.

Im Folgenden wird anhand der Fig. 5 bis 9 die Langestreckenoptimierung 22 erläutert.

In einem Prozess 30 ermittelt die Langstreckenoptimierung 22 Eignungsparameter für die neun Streckentypen, die oben bereits erwähnt wurden. Dazu werden bei der Ausführung des Prozesses 30 Streckentypendaten 32 empfangen, in denen die oben genannten neun verschiedenen Streckentypen sind. Die Streckentypendaten 32 enthalten außerdem für jeden gespeicherten Streckentyp die oben in den Gleichungen (1) und (2) eingeführten Werte, nämlich für jeden Streckentyp den spezifischen Kraftstoffverbrauch und den spezifischen Stromverbrauch bezogen auf einen Normstrecke von 100 km. Außerdem kann der oben eingeführte Parameter $q_{EV}$ entsprechend gesetzt sein, um den Anteil an rein elektrisch gefahrener Fahrstreckenlänge zu erhöhen, wie es oben ausgeführt wurde.

Zum Beispiel kann als Werte für den Streckentyp "Autobahn (Ebene)" für $Q_{EV}$

$$Q_{EV} = \frac{5\,\frac{kg}{100km}}{16^{1.0}\,\frac{kWh}{100km}}$$

gespeichert sein und für den Streckentyp Stadt die Werte:

$$Q_{EV} = \frac{7\dfrac{kg}{100km}}{12^{1,0}\dfrac{kWh}{100km}}$$

Je größer der $Q_{EV}$-Wert ist, desto besser ist der Streckentyp für den Fahrzustand I des rein elektrischen Fahrens geeignet. Der Parameter $q_{EV}$ ist in diesen Fällen gleich 1,0 gesetzt und der $Q_{EV}$-Wert von 0,58 für den Streckentyp "Stadt" ist deutlich größer als der $Q_{EV}$-Wert von 0,31 für den Streckentyp Autobahn. Dementsprechend ist hier das Ergebnis, dass der Streckentyp "Stadt" deutlich besser für den rein elektrischen Fahrzustand I geeignet ist als der Streckentyp "Autobahn".

Bei einem anderen Beispiel ist der $Q_{EV}$-Wert für einen Streckentyp "Stau", bei dem viele Nebenverbraucher eingeschaltet sind, die den elektrischen Stromverbrauch stark erhöhen

$$Q_{EV} = \frac{8,5\dfrac{kg}{100km}}{16^{1,3}\dfrac{kWh}{100km}}$$

für den Streckentyp "Landstraße (Ebene)":

$$Q_{EV} = \frac{6\dfrac{kg}{100km}}{12^{1,3}\dfrac{kWh}{100km}}$$

wobei hier der $q_{EV}$-Wert auf 1,3 gesetzt wurde, da eigentlich der $Q_{EV}$-Wert für den Streckentyp "Stau" mit eingeschalteten Nebenverbrauchern größer wäre als für den Streckentyp "Landstraße". Durch Setzen des $q_{EV}$-Werts auf 1,3 wird der $Q_{EV}$-Wert des Streckentyps "Landstraße" mit 0,24 aber größer als der für "Stau" mit 0,23, sodass auf der Landstraße im rein elektrischen Fahrzustand gefahren wird. Bei dem hier vorliegenden Vergleich zwischen dem Streckentyp "Stau" und "Landstraße" wäre normalerweise der elektrische Stromverbrauch im Stau erheblich geringer als auf der Landstraße. Sobald allerdings eine hohe Nebenverbraucherleistung anliegt, erhöht sich der Stromverbrauch. Der Stromverbrauch der Nebenverbraucher ist dabei rein zeitabhängig. Daher ist im obigen Beispiel der Stromverbrauch für den Streckentyp "Stau" höher als für den Streckentyp "Landstraße", was ohne die zusätzliche Nebenverbraucherleistung nicht der Falle wäre. Durch die zusätzliche Einführung des $q_{EV}$-Wertes wird dann der Streckentyp "Landstraße" für den rein elektrischen Fahrzustand I bevorzugt, wodurch die rein elektrisch gefahrene Streckenlänge verlängert wird.

Diese Werte sind rein beispielhaft zu verstehen und dienen nur der Veranschaulichung. Für die anderen Streckentypen sind ebenfalls entsprechende $Q_{EV}$-Werte gespeichert.

Analog sind in den Streckentypdaten 32 auch noch die entsprechenden Werte für $Q_{CH}$ gespeichert (siehe Gleichung (2) oben), sodass für jeden der neun Streckentypen die zu gewinnende elektrische Energiemenge $\Delta e$ und die zusätzlich für die Erzeugung der elektrischen Energiemenge benötigte Kraftstoffmenge $\Delta b$ in den Streckentypdaten 32 enthalten sind.

In einem Prozess 33 sortiert das Verfahren nun die einzelnen Streckentypen nach ihrer Eignung in einem rein elektrischen Fahrzustand I durchfahren zu werden und weist einen entsprechenden Eignungsparameter zu. Die Sortierung geschieht anhand der $Q_{EV}$-Werte für die Streckentypen, wobei der höchste $Q_{EV}$-Wert die beste Eignung für den rein elektrischen Fahrzustand angibt und folglich den Eignungsparameter "$P_E = 1$" erhält, der zweithöchste $Q_{EV}$-Wert die zweitbeste Eignung mit dem Eignungsparameter "$P_E = 2$", usw. Bei der Ermittlung des jeweiligen Eignungsparameters "$P_E$" für die Streckentypen werden außerdem noch Daten 31 aus einem Fahrzeug-Energiemanagement berücksichtigt, die z.B. einen aktuellen Stromverbrauch von Verbrauchern oder dergleichen angeben. Dies wird bei der Zuordnung des entsprechenden Eignungsparameters für den jeweiligen Streckentyp beachtet werden. Wie oben auch ausgeführt wurde, kann die Langstreckenoptimierung 22 kontinuierlich ausgeführt werden, d.h. jedesmal wenn der Prozess einmal vollständig durchlaufen wurde, startet er von vorne. Dadurch können sich auch die Daten 31, die vom Fahrzeug-Energiemanagement kommen ändern. So werden manche Verbraucher, wie Heizung, Standheizung, Scheibenwischer, Abblendlicht/Fernlicht typischerweise erst nach dem Losfahren eingeschaltet, sodass auch solche Änderungen im Stromverbrauch bei der Entscheidung, ob ein Streckensegment rein elektrisch durchfahren wird oder nicht, berücksichtigt werden. Als Ergebnis liefert der Prozess 33 ein Datenfeld 34, in dem für jeden vorgegebenen Streckentyp ein Eignungsparameter $P_E$ zugewiesen ist, der die Eignung für den rein elektrischen Fahrzustand I angibt.

Analog sortiert ein Prozess 36 die Streckentypen nach ihrer Eignung, in einem hybridischen Fahrzustand III durchfahren zu werden, in dem der Energiespeicher 10 geladen wird. Auch hier können die Fahrzeug-Energiemanagement-Daten 31 bei der Zuweisung eines Eignungsparameters $P_L$ berücksichtigt werden. Der Prozess 36 sortiert die einzelnen Streckentypen anhand des $Q_{CH}$-Wertes, wobei der höchste $Q_{CH}$-Wert die beste Eignung für den Fahrzustand III zum Laden des Energiespeichers 10 angibt und entsprechend ein Eignungsparameter "$P_L = P_{MAX}$" zugewiesen wird, der zweithöchste $Q_{CH}$-Wert die zweitbeste Eignung für den Fahrzustand zum Laden des Energiespeichers 10 angibt und entsprechend ein Eignungsparameter "$P_L = P_{MAX}-1$" zugewiesen wird, etc. Der Parameter $P_{MAX}$ entspricht der Anzahl unterschiedlicher Eignungsparameterwerte, wobei im vorliegenden Ausführungsbeispiel die Anzahl unterschiedlicher Eignungsparameterwert identisch mit der Anzahl von Streckentypen ist und folglich $P_{MAX}=9$ ist, da es hier neun unterschiedliche Streckentypen gibt. Hier wird für die beste Eignung folglich der höchstmögliche Eignungsparameterwert $P_{MAX}$ genommen, wobei dann die Eignung mit der Verringerung des Eignungsparameters schlechter wird.

Die Ermittlung des Eignungsparameters $P_L$ kann durch die Einbeziehung der Fahrzeug-Energiemanagement-Daten 31 allerdings auch zu einem anderen Ergebnis kommen, wenn z.B. der Stromverbrauch für einen Streckentyp aktuell aufgrund von eingeschalteten Stromverbrauchern sehr hoch ist. Als Ergebnis liefert der Prozess 36 ein Datenfeld 37, in dem für jeden vorgegebenen Streckentyp ein Eignungsparameter $P_L$ zugewiesen ist, der die Eignung für den den Energiespeicher 10 ladenden Fahrzustand III angibt.

Das Verfahren 30 weist jedem Streckensegment "n" einen passenden Streckentyp zu, was anhand der Streckeninformationen in den Fahrstreckendaten 21 geschehen kann, wie oben bereits ausgeführt (n ist eine natürliche ganze Zahl und wird im Folgenden als Laufparameter verwendet). Dies kann z.B. im Rahmen der folgenden Zuordnung der Eignungsparameter aus den Datenfeldern 34 und 37 geschehen.

In einem Prozess 35 weist das Verfahren die vorher für die Streckentypen ermittelten Eignungsparameter $P_E$ dem jeweiligen Streckensegment n zu, das dem entsprechenden Streckentyp zugeordnet ist. Analog weist ein Prozess 38 die vorher für die Streckentypen ermittelten Eignungsparameter $P_L$ dem jeweiligen Streckensegment n zu, das dem entsprechenden Streckentyp zugeordnet ist.

Schließlich ermittelt ein Prozess 39 für jedes Streckensegment n eine elektrische Energiemenge, nämlich einen elektrischen Energiewert $E_E$, der angibt, wie viel elektrische Energie aus dem Energiespeicher beim Durchfahren des Streckensegments entnommen wird bzw. einen elektrischen Energiewert $E_L$, der angibt, wie viel elektrische Energie in den Energiespeicher beim Durchfahren des Streckensegments n geladen wird.

Als Ergebnis erhält man ein Datenarray 40, das für jedes Streckensegment 1 bis n, was im obigen Beispiel den Streckensegmenten 29a-e entspricht und damit einer Gesamtzahl an Streckensegmenten von n = 6, die Werte $P_E(n)$, $P_L(n)$, $E_E(n)$ und $E_L(n)$ angibt. Das heißt dem ersten Streckensegment "1" (29a) sind die Werte $P_E(1)$, $P_L(1)$, $E_E(1)$ und $E_L(1)$ zugewiesen, dem zweiten Streckensegment "2" (29b) sind die Werte $P_E(2)$, $P_L(2)$, $E_E(2)$ und $E_L(2)$ zugewiesen und so weiter.

Nachdem das Datenarray 40 erhalten ist, springt das Verfahren 30 in einem Schritt 41 zu einem Sub-Prozess 50, in dem die einzelnen Streckensegmente 1 bis n (z.B. 29a-e) betrachtet werden und jedem Streckensegment ein entsprechender Fahrzustand I, II oder III, wie oben ausgeführt, zugewiesen wird.

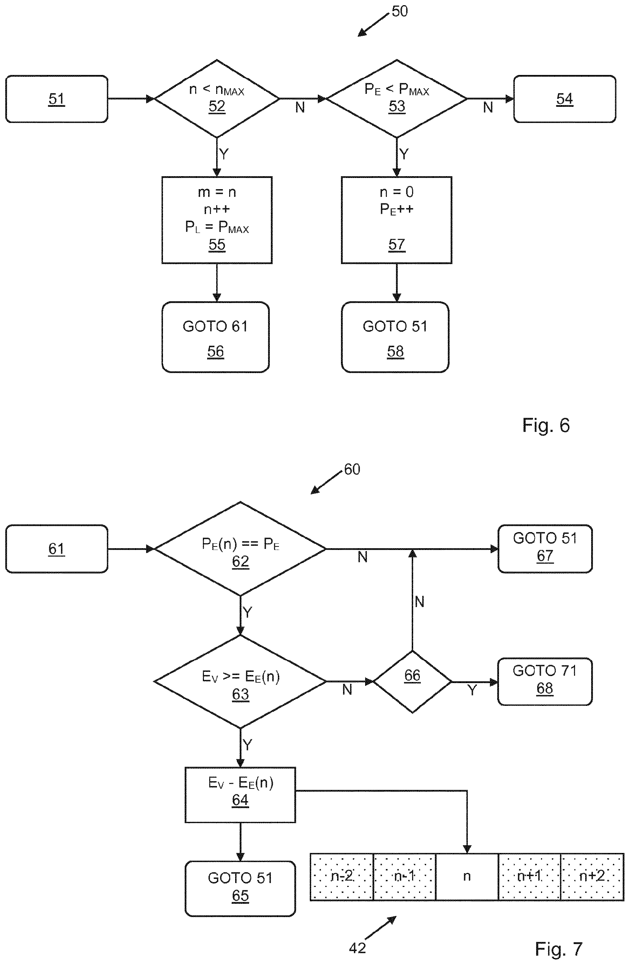

Dazu nimmt der in Fig. 6 dargestellte Sub-Prozess 50 zunächst an, dass jedes Streckensegment im Fahrzustand II durchfahren wird, das heißt hybridisch, ohne den Ladezustand des Energiespeichers 10 zu ändern. Dies ist in Fig. 7 durch einen Fahrstreckenausschnitt 42 visualisiert, bei dem die Streckensegmente n-2, n-1, n+1 und n+2 durch die entsprechende Punkt-Textur als im hybridischen Fahrzustand II zu durchfahren gekennzeichnet sind. Außerdem sind die Variablen n (Streckensegment) und m gleich Null gesetzt. Darüber hinaus setzt der Sub-Prozess 50 den virtuellen Ladezustand des virtuellen Energiespeichers auf den derzeitigen Ladezustand des Energiespeichers 10, das heißt es wird angenommen, dass die verfügbare elektrische Energie $E_V$ gleich der elektrischen Energie ist, wie sie in dem Energiespeicher 10 enthalten ist. Ferner werden zuerst die Streckentypen betrachtet, deren Eignungsparameter für den rein elektrischen Fahrzustand am besten ist, weswegen die Variable $P_E=0$ gesetzt wird, und deren Eignungsparameter für den Fahrzustand III, bei dem der Energiespeicher geladen wird, am besten ist, weswegen die Variable $P_L=P_{MAX}$ gesetzt wird.

Der Sub-Prozess 50 startet bei 51 und in einer ersten Abfrage 52, wird überprüft ob $n < n_{MAX}$ ist, das heißt, ob bereits des letzte Streckensegment erreicht ist. Ist das letzte Streckensegment erreicht geht es im "N"-Zweig weiter zu einer nächsten Abfrage 53, in der überprüft wird, ob der aktuell betrachtete Streckentyp, der anhand des Eignungsparameters $P_E$ identifiziert wird, der letzte ist. Der letzte Streckentyp ist derjenige, der die schlechteste Eignung für den rein elektrischen Fahrzustand hat und damit den größten Eignungsparameterwert $P_{MAX}$. Im vorliegenden Ausführungsbeispiel ist $P_{MAX}=9$, da es neun verschiedene Streckentypen gibt. Kommt die Abfrage 53 zum Ergebnis, dass alle Streckentypen durchgeprüft sind, geht es von dort im "N"-Zweig weiter und der Sub-Prozess 50 endet bei 54, wobei damit auch das gesamte Verfahren 22 endet. Ist die Abfrage 53 hingegen positiv, geht es im "Y"-Zweig weiter und in einem Schritt 57 wird die Zählvariable n gleich Null gesetzt und mit $P_E$++ der nächst beste Eignungsparameter gesetzt und die dem zugehörigen Streckentyp zugeordneten Streckensegmente werden untersucht. Danach springt das Programm bei 58 zurück zu Start 51.

Stellt die Abfrage 52 hingegen fest, dass es sich nicht um das letzte Streckensegment handelt, das heißt n ist kleiner als $n_{MAX}$, so geht es im "Y"-Zweig weiter und in einem Schritt 55 wird festgelegt, dass bezüglich des Fahrzustandes III, bei dem der Energiespeicher geladen wird, mit dem Streckentyp begonnen wird, dem der höchste Eignungsparameter $P_{MAX}$ zugewiesen wurde, d.h. $P_L=P_{MAX}$. Die Zwischenvariable m wird gleich n gesetzt und die Zählvariable n für die Streckensegmente wird um eins erhöht ("n++") und das Verfahren springt im Schritt 56 zu einem Start 61 eines nächsten Sub-Prozesses 60, in dem überprüft wird, ob einem Streckensegment der rein elektrische Fahrzustand zugewiesen werden kann.

Der Sub-Prozess 60 startet bei 61 und in einer ersten Abfrage 62 wird überprüft, ob das aktuelle Streckensegment n, das den Eignungsparameter "$P_E$(n)" im Datenarray 40 hat, auch zu dem aktuell betrachteten Streckentyp mit dem Eignungsparameter $P_E$ gehört. Ist die Antwort positiv, so geht es im "Y"-Zweig weiter zu einer nächsten Abfrage 63, in der überprüft wird, ob die verfügbare elektrische Energie $E_V$ des virtuellen Energiespeichers größer oder gleich der elektrischen Energiemenge $E_E$(n) aus dem Datenarray 40 ist, die für das Durchfahren des betrachteten Streckensegmentes n im rein elektrischen Fahrzustand benötigt wird. Ist die Abfrage 63 positiv, geht es im "Y"-Zweig weiter zu einem Schritt 64, in dem dem Streckensegment n der rein elektrische Fahrzustand zugewiesen wird, was in dem gezeigten Fahrstreckenausschnitt 42 durch das weiß gehaltene Streckensegment n gekennzeichnet ist. Außerdem wird im Schritt 64 der Ladezustand des virtuellen Energiespeichers, das heißt die verfügbare elektrische Energie $E_V$ durch die elektrische Energiemenge $E_E$(n), die zum Durchfahren des betrachteten Streckensegments n im rein elektrischen Fahrzustand I benötigt wird, reduziert. Danach springt der Sub-Prozess 60 im Schritt 65 zum Start 51 des Sub-Prozesses 50, sodass das nächste Streckensegment betrachtet werden kann.

Stellt die Abfrage 62 fest, dass das betrachtete Streckensegment n nicht zum betrachteten Streckentyp mit dem Eignungsparameter $P_E$ gehört, so geht der Sub-Prozess 60 im "N"-Zweig weiter und springt im Schritt 67 zurück zum Start 51 des Sub-Prozesses 50 und betrachtet das nächste Streckensegment bzw. den nächsten Streckentyp.

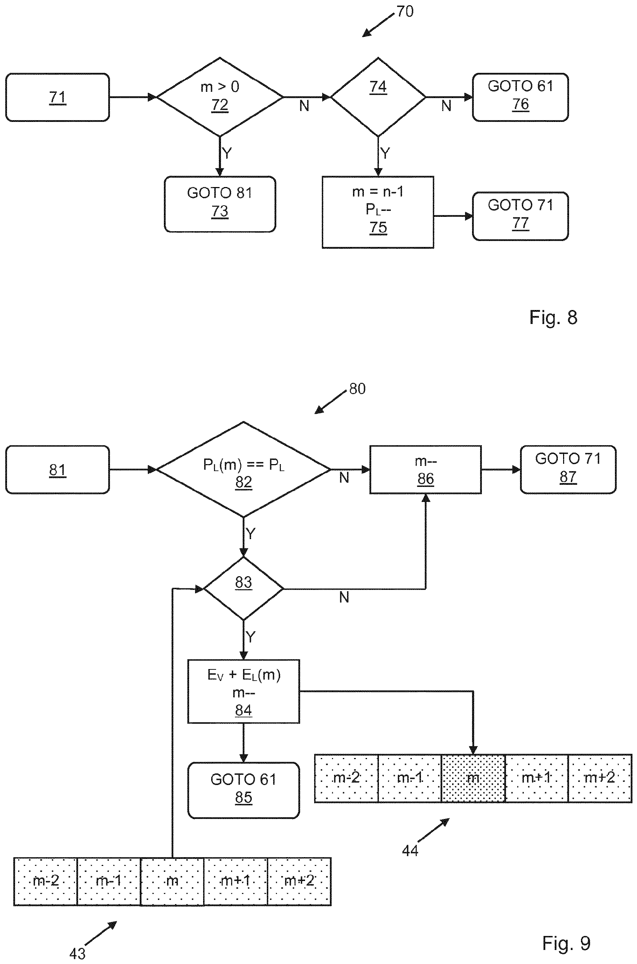

Stellt die Abfrage 63 fest, dass die verfügbare elektrische Energie $E_V$ des virtuellen Energiespeichers nicht ausreicht, um das betrachtete Streckensegment rein elektrisch zu durchfahren, wird in einer Abfrage 66 überprüft, ob das Laden des Energiespeicher generell erlaubt ist bzw. systembedingt möglich ist. Ist das Ergebnis negativ, so geht es im "N"-Zweig zum Schritt 67, der oben besprochen wurde. Ist das Ergebnis positiv, so geht es im "Y"-Zweig weiter zum Schritt 68 bei dem zum Start 71 eines Sub-Prozesses 70 gesprungen wird, der in Fig. 8 veranschaulicht ist.

Der Sub-Prozess 70 überprüft die Eignung des betrachteten Streckensegments, im Fahrzustand 2 durchfahren zu werden, bei dem der Energiespeicher 10 geladen wird.

Nach dem Start 71 überprüft eine Abfrage 72 des Sub-Prozesses 70, ob das betrachtete Streckensegment m auch nach dem derzeit befahrenen liegt. Ist dies nicht der Fall, so geht es im "N"-Zweig weiter zu einer Abfrage 74, in der überprüft wird, ob alle Streckentypen für den Fahrzustand zum Laden des Energiespeichers 10 überprüft wurden ($P_L$ > 1) und ob die Eignung für den Fahrzustand III des Ladens größer ist als die Eignung für den rein elektrischen Fahrzustand I, d. es wird überprüft, ob $1/Q_{CH}(P_L) < Q_{EV}(P_E)$ ist. Ist das Ergebnis negativ, so geht es im "N"-Zweig weiter zu einem Schritt 76 bei dem zurück zum Start 61 des Sub-Prozesses 60 gesprungen wird. Ist das Ergebnis der Abfrage 74 positiv, so geht es im "Y"-Zweig weiter zu einem Schritt 75, in dem festgestellt wird, dass das aktuell betrachtete Streckensegment m vor dem Streckensegment liegt, das bezüglich des rein elektrischen Fahrzustandes I betrachtet wurde, weswegen die Zählvariable m gleich n-1 gesetzt wird und der nächste Streckentyp bezüglich des Fahrzustandes zum Laden betrachtet wird ($P_L$--, wobei "--" die Verringerung um eines und "++" die Erhöhung um eines angibt). Danach springt der Sub-Prozess im Schritt 77 an den Start 71 zurück.

Ist bei der Abfrage 72 das Ergebnis positiv, d.h. das betrachtete Streckensegment liegt nach dem derzeit befahrenen, so springt der Sub-Prozess 70 im Schritt 73 zu einem Start 81 eines Sub-Prozesses 80, der in Fig. 8 veranschaulicht ist, und in dem der Fahrzustand zum Laden des Energiespeichers 10 zugewiesen wird.

Nach dem Start 81 untersucht der Sub-Prozess 80 in einer Abfrage 82, ob das betrachtete Streckensegment m zu dem gerade betrachteten Streckentyp gehört ($P_L$(m) == $P_L$, wobei "==" eine Abfrage repräsentiert, ob die beiden Variablen identisch sind). Ist das Ergebnis negativ, so geht es im "N"-Zweig weiter zu einem Schritt 86, bei dem das nächste nähere Streckensegment ausgewählt wird, indem die Zählvariable m des Streckensegments verringert wird (m--) und der Prozess geht weiter zum Schritt 87 in dem zum Start 71 des Sub-Prozess 70 gesprungen wird.

Ist die Abfrage 82 positiv, das heißt das betrachtete Streckensegment m gehört zu dem betrachteten Streckentyp, so geht es im "Y"-Zweig weiter zu einer Abfrage 83, in der überprüft wird, ob in dem betrachteten Streckensegment m noch kein Fahrzustand zugewiesen ist, d.h. ob dem Streckensegment m noch der hybridische Fahrzustand als Startwert zugewiesen ist, bei dem der Ladzustand erhalten wird. Dies ist im Fahrstreckenausschnitt 43 in Fig. 9 dadurch dargestellt, dass alle Streckensegmente m-2, m-1, m, m+1, m+2 die oben genannte Punkt-Textur haben, die diesen hybridischen Fahrzustand I darstellt. Ist die Abfrage 83 negativ, so geht es im "N"-Zweig weiter zum bereits besprochenen Schritt 86.

Ist die Abfrage 83 positiv, das heißt es ist noch kein anderer Fahrzustand zugewiesen, so geht es im "Y"-Zweig weiter zu einem Schritt 84, in dem dem Streckensegment m der hybridische Fahrzustand III zugewiesen wird, bei dem der Energiespeicher 10 geladen wird. Dies ist in einem Fahrstreckenausschnitt 44 durch eine entsprechend dichte Punkt-Textur für das Streckensegment m dargestellt. Außerdem wird dem virtuellen Energiespeicher die elektrische Energie $E_L$(m) zugerechnet, die beim Durchfahren des Streckensegments m gewonnen wird ($E_V$ + $E_L$(m)) und die Zählvariable m des Streckensegments wird um eins verringert (m--). Danach springt der Sub-Prozess 80 im Schritt 85 zurück zum Start 61 des Sub-Prozess 60.

Nach entsprechendem Durchlaufen des Verfahrens 30 mit den Sub-Prozess 50, 60, 70 und 80 liefert die Langestreckenoptimierung 22, wie oben auch schon erwähnt, die langstreckenoptimierten Streckendaten 23, in denen jedem Streckensegment 29a-e ein Fahrzustand zugewiesen ist.

**Bezugszeichenliste**

1 Triebstrang
2 Verbrennungskraftmaschine
3 Elektromaschine
4 Riemen-Starter-Generator
5 Doppelkupplungsgetriebe
6 Fahrkupplungen
7 Trennkupplung
8 Achse
9 Klima-Kompressor-Einheit
10 Energiespeicher
11 Hochvoltnetz
12 12 V-Batterie
13 12 V-Bordnetz
14 Gleichspannungswandler
15 Steuerung
16 Navigationskombigerät
17 Anzeige von 16
18 Doppelriemenspanner
20 Verfahren zum Ermitteln eines Fahrzustandes für eine vorausliegende Fahrstrecke
21 Streckendaten
22 Langstreckenoptimierung
23 langstreckenoptimierte Streckendaten
24 Prozess zum Berechnen des aktuellen Soll-Fahrzustandes
25 Soll-Fahrzustand
26 Streckendaten kurze Vorschau
27 Motorlaufzeitdaten
28 Antriebstrangdaten
29 vorausliegende Fahrstrecke
29a-e Streckensegmente von 29
30 Prozess zum Ermittlung von Eignungsparametern
31 Fahrzeug-Energiemanagement-Daten
32 Streckentypendaten
33 Prozess zum Sortieren der Streckentypen nach Eignungsparameter für Fahrzustand rein elektrisches Fahren
34 Datenfeld
35 Zuweisen der Eignungsparameter aus 33, 34 zu den Streckensegmenten
36 Prozess zum Sortieren der Streckentypen nach Eignungsparameter für Fahrzustand zum Laden des Energiespeichers
37 Datenfeld
38 Zuweisen der Eignungsparameter aus 36, 37 zu den Streckensegmenten

39 Zuweisen elektrische Energiemenge Fahren/Laden zu den Streckensegmenten
40 Datenarray
41 Sprunganweisung
42 Fahrstreckenausschnitt
43 Fahrstreckenausschnitt
44 Fahrstreckenausschnitt
50 Sub-Prozess zum Zuweisen von Fahrzustand zu Streckensegmenten
51 Start
52 Abfrage
53 Abfrage
54 Ende
55 Beginne mit Streckentyp mit höchster Eignung für Fahrzustand zum Laden des Energiespeichers
56 Sprung zu 61
57 Nächster Streckentyp
58 Sprung zu 51
60 Sub-Prozess zum Zuweisen von Fahrzustand rein elektrisches Fahren
61 Start
62 Abfrage
63 Abfrage
64 Zuweisung rein elektrische Fahrzustand zu Streckensegment n
65 Sprung zu 51
66 Abfrage Laden erlaubt
67 Sprung zu 51
68 Sprung zu 71
70 Sub-Prozess Überprüfen der Eignung des Streckensegments für Fahrzustand zum Laden des Energiespeichers
71 Start
72 Abfrage
73 Sprung zu 81
74 Abfrage alle Streckentypen überprüft
75 Liegt Streckensegment davor
76 Sprung zu 61
77 Sprung zu 71
80 Sub-Prozess zum Zuweisen des Fahrzustands, in dem der Energiespeicher geladen wird
81 Start
82 Abfrage
83 Abfrage noch kein Fahrzustand zugewiesen
84 Zuweisen Fahrzustand zum Streckensegment m
85 Sprung zu 61
86 Nächstes Streckensegment
87 Sprung zu 71
I rein elektrischer Fahrzustand
II hybridischer Fahrzustand (Ladezustand halten)
III hybridischer Fahrzustand (laden)
$E_E$ elektrische Energiemenge, die beim Durchfahren des Streckensegments entnommen wird
$E_E(n)$ elektrische Energiemenge $E_E$ für Streckensegment n des Datenarrays 40

$E_L$     elektrische Energiemenge, die beim Durchfahren des Streckensegments geladen wird

$E_V$     verfügbare elektrische Energie

n     Laufparameter, mit n = 1, 2, 3, ....

$n_{MAX}$     maximaler Wert für n

n++     Erhöhung von n um 1

m     Laufvariable für Streckensegment

N     N-Zweig

$P_E$     Eignungsparameter rein elektrischer Fahrzustand

$P_E(n)$     Eignungsparameter rein elektrischer Fahrzustand für Streckensegment n des Datenarrays 40

$P_L$     Eignungsparameter für hybridischen Fahrzustand (laden) $P_L(m)$ Eignungsparameter für $P_L$ für Streckensegment m

$P_{max}$     maximaler Eignungsparameterwert

$P_E$++     Erhöhung von $P_E$ um 1

Y     Y-Zweig

## Patentansprüche

**1.** Verfahren zum Ermitteln eines Fahrzustandes eines Hybridfahrzeuges für Streckensegmente einer vorausliegenden Fahrstrecke (29), wobei das Hybridfahrzeug eine Verbrennungskraftmaschine (2), eine Elektromaschine (3) und einen elektrischen Energiespeicher (10) zur Versorgung der Elektromaschine (3) mit elektrischer Energie umfasst, wobei das Verfahren die folgenden Schritte aufweist:

Erhalten von Fahrstreckendaten (21), die die vorausliegende Fahrstrecke (29) repräsentieren, wobei die vorausliegende Fahrstrecke (29) in mehrere Streckensegmente (29a-e) unterteilt ist und die Fahrstreckendaten (21) Streckeninformationen über die Streckensegmente (29a-e) enthalten; und

Ermitteln (30) eines Eignungsparameters ($P_E$, $P_L$) für einen vorgegebenen Fahrzustand des Hybridfahrzeugs für jedes Streckensegment (29a-e) auf Grundlage der Streckeninformationen für das jeweilige Streckensegment (29a-e), wobei der vorgegebene Fahrzustand wenigstens einen rein elektrischen Fahrzustand (I) umfasst, bei dem die Elektromaschine (3) das Hybridfahrzeug antreibt, und einen zweiten Fahrzustand (II, III), bei dem die Verbrennungskraftmaschine (2) das Hybridfahrzeug antreibt wobei das Verfahren **dadurch gekennzeichnet ist, dass** das Ermitteln (30) des Eignungsparameters ($P_E$, $P_L$) die Ermittlung, welche Durchschnittsgeschwindigkeit in einem Streckensegment (29a-e) der vorausliegenden Fahrstrecke (29) womöglich gefahren werden kann umfasst und für vorgegebene Durchschnittsgeschwindigkeitsintervalle vorgegebene Eignungsparameter definiert sind.

**2.** Verfahren nach Anspruch 1, wobei das Ermitteln (30) des Eignungsparameters ($P_E$, $P_L$) weiter das Ermitteln eines Kraftstoffverbrauches unter Annahme eines den Ladezustand des Energiespeichers (10) erhaltenden Fahrzustandes und Ermitteln eines Stromverbrauches unter Annahme eines rein elektrischen Fahrzustandes (I) für die Streckensegmente (29a-e) umfasst.

**3.** Verfahren nach Anspruch 2, wobei das Ermitteln (30) des Eignungsparameters ($P_E$, $P_L$) das Bestimmen eines Quotienten zwischen dem Kraftstoffverbrauch unter Annahme eines den Ladezustand des Energiespeichers erhaltenden Fahrzustandes (II) und dem Stromverbrauch unter Annahme eines rein elektrischen Fahrzustandes (I) umfasst.

**4.** Verfahren nach einem der vorhergehenden Ansprüche, wobei der vorgegebene Fahrzustand weiter einen Fahrzustand (III) aufweist, bei dem der Energiespeicher (10) geladen wird.

**5.** Verfahren nach Anspruch 4, wobei das Ermitteln (30) des Eignungsparameters ($P_E$, $P_L$) weiter das Ermitteln eines zusätzlichen Kraftstoffverbrauches zum Laden des Energiespeichers (10) umfasst und das Ermitteln einer elektrischen Energiemenge, die beim Laden des Energiespeichers unter Annahme des den Energiespeicher ladenden Fahrzustandes (III) zugeführt wird.

**6.** Verfahren nach Anspruch 5, wobei das Ermitteln (30) des Eignungsparameters ($P_E$, $P_L$) das Bestimmen eines Quotienten zwischen dem zusätzlichen Kraftstoffverbrauch zum Laden des Energiespeichers und der elektrischen Energiemenge umfasst, die beim Laden des Energiespeichers unter Annahme des den Energiespeicher ladenden Fahrzustandes (III) zugeführt wird.

**7.** Verfahren nach einem der vorhergehenden Ansprüche, zusätzlich den Schritt des Empfangens von fahrzeugbezogenen Daten (31) umfassend, die charakteristisch sind für einen elektrischen Energieverbrauch des Hybridfahrzeugs, wobei das Ermitteln (30) des Eignungsparameters ($P_E$, $P_L$) zusätzlich auf den empfangenen fahrzeugbezogenen Daten basiert.

**8.** Verfahren nach einem der vorhergehenden Ansprüche, wobei für mehrere Streckentypen Streckentypendaten (32) vorgegeben sind und das Ermitteln (30) des Eignungsparameters ($P_E$, $P_L$) das Zuordnen der Streckensegmente (29a-e) jeweils zu einem Streckentyp mit den Streckentypendaten (32) vorgenommen wird.

9. Verfahren nach Anspruch 8, wobei für jeweils einen der Streckentypen der Eignungsparameter ($P_E$, $P_L$) ermittelt wird und dadurch der Eignungsparameter ($P_E$, $P_L$) für die dem jeweiligen Streckentyp zugeordneten Streckensegmente (29a-e) ermittelt wird.

10. Hybridfahrzeug mit einer Verbrennungskraftmaschine (2), einer Elektromaschine (3), einem elektrischen Energiespeicher (10) zur Versorgung der Elektromaschine (3) mit elektrischer Energie und einer Steuerung (15), wobei die Steuerung (15) dazu eingerichtet ist, das Verfahren nach einem der vorhergehenden Ansprüche auszuführen.

**Claims**

1. Method for ascertaining a driving state of a hybrid vehicle for route segments of a driving route (29) lying ahead, wherein the hybrid vehicle comprises an internal combustion engine (2), an electric machine (3), and an electric energy store (10) for supplying the electric machine (3) with electrical energy, wherein the method has the following steps:

   receiving driving route data (21), which represents the driving route (29) lying ahead, wherein the driving route (29) lying ahead is divided into a plurality of route segments (29a-e), and the driving route data (21) contains route information about the route segments (29a-e); and acquiring (30) a suitability parameter ($P_E$, $P_L$) for a predetermined driving state of the hybrid vehicle for each route segment (29a-e) on the basis of the route information for the respective route segment (29a-e), wherein the predefined driving state comprises at least one purely electric driving state (I), in which the electric machine (3) drives the hybrid vehicle, and a second driving state (II, III), in which the internal combustion engine (2) drives the hybrid vehicle, wherein the method is **characterized in that** the acquisition (30) of the suitability parameter ($P_E$, $P_L$) comprises acquiring the average speed at which it is possible to drive in a route segment (29a-e) of the driving route (29) lying ahead where possible and predefined suitability parameters are defined for predefined average speed intervals.

2. Method according to Claim 1, wherein the acquisition (30) of the suitability parameter ($P_E$, $P_L$) also comprises acquiring a fuel consumption assuming a driving state which maintains the state of charge of the energy store (10) and acquiring a current consumption assuming a purely electric driving state (I) for the route segments (29a-e).

3. Method according to Claim 2, wherein the acquisition (30) of the suitability parameter ($P_E$, $P_L$) comprises determining a quotient between the fuel consumption assuming a driving state (II) which maintains the state of charge of the energy store and the current consumption assuming a purely electric driving state (I).

4. Method according to one of the preceding claims, wherein the predefined driving state also has a driving state (III) in which the energy store (10) is charged.

5. Method according to Claim 4, wherein the acquisition (30) of the suitability parameter ($P_E$, $P_L$) also comprises acquiring an additional fuel consumption for charging the energy store (10), and acquiring a quantity of electrical energy which is fed in during the charging of the energy store assuming the driving state (III) which charges the energy store.

6. Method according to Claim 5, wherein the acquisition (30) of the suitability parameter ($P_E$, $P_L$) comprises determining a quotient between the additional fuel consumption for charging the energy store and the quantity of electrical energy which is fed in during the charging of the energy store assuming the driving state (III) which charges the energy store.

7. Method according to one of the preceding claims, additionally comprising the step of receiving vehicle-related data (31) which is characteristic of an electrical energy consumption of the hybrid vehicle, wherein the acquisition (30) of the suitability parameter ($P_E$, $P_L$) is additionally based on the received vehicle-related data.

8. Method according to one of the preceding claims, wherein route type data (32) is predefined for a plurality of route types, and the acquisition (30) of the suitability parameter ($P_E$, $P_L$) is performed the assignment of each of the route segments (29a-e) to a route type with the route type data (32).

9. Method according to Claim 8, wherein the suitability parameter ($P_E$, $P_L$) is acquired for one of the route types in each case, and as a result the suitability parameter ($P_E$, $P_L$) is acquired for the route segments (29a-e) which are assigned to the respective route type.

10. Hybrid vehicle having an internal combustion engine (2), an electric machine (3), an electric energy store (10) for supplying the electric machine (3) with electrical energy, and a controller (15), wherein the controller (15) is configured to execute the method according to one of the preceding claims.

**Revendications**

1. Procédé pour identifier un état de déplacement d'un véhicule hybride pour des segments de trajet d'un trajet de déplacement (29) à venir, le véhicule hybride comportant un moteur à combustion interne (2), une machine électrique (3) et un accumulateur d'énergie électrique (10) destiné à alimenter la machine électrique (3) avec de l'énergie électrique, le procédé comprenant les étapes suivantes :

   obtention de données de trajet de déplacement (21) qui représentent le trajet de déplacement (29) à venir, le trajet de déplacement (29) à venir étant subdivisé en plusieurs segments de trajet (29a-e) et les données de trajet de déplacement (21) contenant des informations de trajet à propos des segments de trajet (29a-e) ; et identification (30) d'un paramètre d'adéquation ($P_E$, $P_L$) pour un état de déplacement prédéfini du véhicule hybride pour chaque segment de trajet (29a-e) sur la base des informations de trajet pour le segment de trajet (29a-e) respectif, l'état de déplacement prédéfini comprenant au moins un état de déplacement purement électrique (I), avec lequel la machine électrique (3) propulse le véhicule hybride, et un deuxième état de déplacement (II, III), avec lequel le moteur à combustion interne (2) propulse le véhicule hybride, le procédé étant **caractérisé en ce que** l'identification (30) du paramètre d'adéquation ($P_E$, $P_L$) comprend l'identification de la vitesse moyenne à laquelle il est peut-être possible de se déplacer dans un segment de trajet (29a-e) du trajet de déplacement (29) à venir et des paramètres d'adéquation prédéfinis sont définis pour des intervalles de vitesse moyenne prédéfinis.

2. Procédé selon la revendication 1, l'identification (30) du paramètre d'adéquation ($P_E$, $P_L$) comprenant en plus l'identification d'une consommation de carburant en supposant un état de déplacement maintenant l'état de charge de l'accumulateur d'énergie (10) et l'identification d'une consommation d'électricité en supposant un état de déplacement purement électrique (I) pour les segments de trajet (29a-e).

3. Procédé selon la revendication 2, l'identification (30) du paramètre d'adéquation ($P_E$, $P_L$) comprenant la détermination d'un quotient entre la consommation de carburant en supposant un état de déplacement (II) maintenant l'état de charge de l'accumulateur d'énergie et la consommation d'électricité en supposant un état de déplacement purement électrique (I).

4. Procédé selon l'une des revendications précédentes, l'état de déplacement prédéfini comprenant en plus un état de déplacement (III) lors duquel l'accumulateur d'énergie (10) est chargé.

5. Procédé selon la revendication 4, l'identification (30) du paramètre d'adéquation ($P_E$, $P_L$) comprenant en plus l'identification d'une consommation de carburant supplémentaire servant à la charge de l'accumulateur d'énergie (10) et l'identification d'une quantité d'énergie électrique qui est acheminée lors de la charge de l'accumulateur d'énergie en supposant l'état de déplacement (III) qui charge l'accumulateur d'énergie.

6. Procédé selon la revendication 5, l'identification (30) du paramètre d'adéquation ($P_E$, $P_L$) comprenant en plus la détermination d'un quotient entre la consommation de carburant supplémentaire servant à la charge de l'accumulateur d'énergie et la quantité d'énergie électrique qui est acheminée lors de la charge de l'accumulateur d'énergie en supposant l'état de déplacement (III) qui charge l'accumulateur d'énergie.

7. Procédé selon l'une des revendications précédentes, comprenant en plus l'étape de réception de données (31) relatives au véhicule, qui sont caractéristiques d'une consommation d'énergie électrique du véhicule hybride, l'identification (30) du paramètre d'adéquation ($P_E$, $P_L$) se basant en plus sur les données relatives au véhicule reçues.

8. Procédé selon l'une des revendications précédentes, des données de type de trajet (32) étant prédéfinies pour plusieurs types de trajet et l'identification (30) du paramètre d'adéquation ($P_E$, $P_L$) étant effectuée l'affectation des segments de trajet (29a-e) respectivement à un type de trajet ayant les données de type de trajet (32).

9. Procédé selon la revendication 8, le paramètre d'adéquation ($P_E$, $P_L$) étant identifié respectivement pour l'un des types de trajet et le paramètre d'adéquation ($P_E$, $P_L$) pour les segments de trajet (29a-e) affectés au type de trajet respectif étant ainsi identifié.

10. Véhicule hybride comportant un moteur à combustion interne (2), une machine électrique (3), un accumulateur d'énergie électrique (10) destiné à alimenter la machine électrique (3) avec de l'énergie électrique et une commande (15), la commande (15) étant conçue pour mettre en œuvre le procédé selon l'une des revendications précédentes.

Fig. 1

Fig. 2

20

21

22

23

26

27

28

24

16

25

Fig. 3

29

| 29a | 29b | 29c | 29d | 29e |
|-----|-----|-----|-----|-----|

Fig. 4

Fig. 5

EP 3 333 036 B1

```
                                            ╲50

      ┌──────┐        ╱╲            ╱╲              ┌──────┐
      │  51  │───────▶ n < nMAX   ─N─▶ PE < PMAX  ─N─▶│  54  │
      └──────┘        ╲  52  ╱        ╲  53  ╱         └──────┘
                         │Y              │Y
                         ▼               ▼
                    ┌─────────┐     ┌─────────┐
                    │  m = n  │     │  n = 0  │
                    │  n++    │     │  PE++   │
                    │ PL = PMAX│    │         │
                    │   55    │     │   57    │
                    └─────────┘     └─────────┘
                         │               │
                         ▼               ▼
                    ┌─────────┐     ┌─────────┐
                    │ GOTO 61 │     │ GOTO 51 │
                    │   56    │     │   58    │
                    └─────────┘     └─────────┘
```

Fig. 6

```
                                         ╲60

   ┌──────┐      ╱╲                                ┌─────────┐
   │  61  │─────▶ PE(n) == PE  ──────────N────────▶│ GOTO 51 │
   └──────┘     ╲   62   ╱                         │   67    │
                    │Y                              └─────────┘
                    ▼                                   ▲N
               ╱╲                          ╱╲            │
              EV >= EE(n) ──N──▶          ╲ 66 ╱ ──Y──▶ ┌─────────┐
               ╲  63   ╱                    ╲╱           │ GOTO 71 │
                    │Y                                   │   68    │
                    ▼                                    └─────────┘
              ┌─────────┐
              │ EV - EE(n)│──────────────┐
              │   64    │                │
              └─────────┘                ▼
                    │           ┌────┬────┬───┬────┬────┐
                    ▼           │n-2 │n-1 │ n │n+1 │n+2 │
              ┌─────────┐       └────┴────┴───┴────┴────┘
              │ GOTO 51 │              ╱
              │   65    │            42
              └─────────┘
```

Fig. 7

24

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1270303 A2
- DE 10005581 A1
- DE 69709002 T2
- US 6314347 B1
- EP 2071285 A1